# EUROPEAN PATENT SPECIFICATION

(11) **EP 4 434 262 B1**
(45) Date of publication and mention of the grant of the patent: **13.05.2026**
(21) Application number: 23704508.3
(22) Date of filing: 06.01.2023
(51) Int. Cl.: H04W 36/00, H04W 76/15, H04W 36/36

(54) **MANAGING CELL GROUP CONFIGURATIONS FOR CONDITIONAL SECONDARY NODE PROCEDURES**
VERWALTUNG VON ZELLGRUPPENKONFIGURATIONEN FÜR BEDINGTE SEKUNDÄRKNOTENPROZEDUREN
GESTION DE CONFIGURATIONS DE GROUPE DE CELLULES POUR DES PROCÉDURES CONDITIONNELLES SUR UN NOEUD SECONDAIRE

(30) Priority: 06.01.2022 US 202263297054 P
(43) Date of publication of application: 25.09.2024
(73) Proprietor: GOOGLE LLC, Mountain View CA 94043 (US)
(72) Inventor: HSIEH, Jing, Mountain View CA 94043 (US); WU, Chih-Hsiang, Mountain View CA 94043 (US)
(74) Representative: Marks & Clerk GST
(86) International application number: PCT/US2023/010315
(87) International publication number: WO 2023/133272

(56) References cited:
- LENOVO ET AL: "Summary of offline discussion on CPAC", vol. RAN WG3, no. Online; 20211101 - 20211111, 15 November 2021 (2021-11-15), XP052098459, Retrieved from the Internet <URL:https://ftp.3gpp.org/tsg_ran/WG3_Iu/TSGR3_114-e/Docs/R3-215952.zip R3-215952 Summary of offline discussion on CPAC_Phase2_v3.docx> [retrieved on 20211115]
- RAN2: "LS on SN initiated inter-SN CPC", vol. RAN WG3, no. Electronic meeting; 20220117 - 20220126, 27 December 2021 (2021-12-27), XP052089258, Retrieved from the Internet <URL:https://ftp.3gpp.org/tsg_ran/WG3_Iu/TSGR3_114bis-e/Docs/R3-220098.zip R3-220098.docx> [retrieved on 20211227]
- GOOGLE: "Discussion on the CG-CandidateList", vol. RAN WG2, no. Electronic Meeting; 20220117 - 20220125, 11 January 2022 (2022-01-11), XP052093540, Retrieved from the Internet <URL:https://ftp.3gpp.org/tsg_ran/WG2_RL2/TSGR2_116bis-e/Docs/R2-2200361.zip R2-2200361 Discussion on the CG-CandidateList.docx> [retrieved on 20220111]

## Description

### FIELD OF THE DISCLOSURE

This disclosure relates generally to wireless communications and, more particularly, to managing conditional configurations for multi-connectivity such as conditional secondary node addition or change procedures.

### BACKGROUND

This background description is provided for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

In telecommunication systems, a user equipment (UE) sometimes can concurrently utilize resources of multiple radio access network (RAN) nodes, such as base stations or components of a distributed base station, interconnected by a backhaul. When these network nodes support different radio access technologies (RATs), this type of connectivity is referred to as Multi-Radio Dual Connectivity (MR-DC). When a UE operates in MR-DC, one base station operates as a master node (MN) that covers a primary cell (PCell), and the other base station operates as a secondary node (SN) that covers a primary secondary cell (PSCell). The UE communicates with the MN (via the PCell) and the SN (via the PSCell). In other scenarios, the UE transfers a wireless connection from one base station to another base station. For example, a serving base station can determine to hand the UE over to a target base station and initiate a handover procedure.

3GPP specification TS 37.340 v16.6.0 describes procedures for a UE to add or change an SN in DC scenarios. These procedures involve messaging (e.g., RRC signaling and preparation) between radio access network (RAN) nodes. This messaging generally causes latency, which in turn increases the probability that the SN addition or SN change procedure will fail. These legacy procedures, which do not involve conditions that are checked at the UE, can be referred to as "immediate" SN addition and SN change procedures.

More recently, for both SN or PSCell addition/change, "conditional" procedures have been considered (i.e., conditional SN or PSCell addition/change). Unlike the "immediate" procedures discussed above, these procedures do not add or change the SN or PSCell, or perform the handover, until the UE determines that a condition is satisfied. As used herein, the term "condition" may refer to a single, detectable state or event (e.g., a particular signal quality metric exceeding a threshold), or to a logical combination of such states or events (e.g., "Condition A and Condition B," or "(Condition A or Condition B) and Condition C", etc.).

To configure a conditional procedure, the RAN provides the condition to the UE, along with a configuration (e.g., one or more random-access preambles, etc.) that will enable the UE to communicate with the appropriate base station, or via the appropriate cell, when the condition is satisfied. For a conditional addition of a base station as an SN or a candidate cell as a PSCell, for example, the RAN provides the UE with a condition to be satisfied before the UE can add that base station as the SN or that candidate cell as the PSCell, and a configuration that enables the UE to communicate with that base station or PSCell after the condition has been satisfied.

In the immediate PSCell addition or change procedure, the RAN (i.e., MN or SN) transmits an RRC reconfiguration message including multiple configuration parameters to the UE and the UE attempts to connect to a (target) PSCell configured by the RRC reconfiguration message. After the UE successfully connects to the SN via the PSCell, the UE communicates with the SN on the PSCell by using the multiple configuration parameters and security key(s) associated to the PSCell and derived from one or more security configuration parameters in the RRC reconfiguration message. The SN also derives security key(s) that match the security key(s) derived from the UE. After the UE successfully connects to the PSCell, the RAN (e.g., the SN) communicates data with the UE by using the matching security key(s) and the multiple configuration parameters.

In some cases, a candidate SN (C-SN) provides multiple candidate configurations when, for example, multiple candidate PSCells are available. When the MN completes the preparation for a conditional SN procedure (e.g., conditional SN addition or conditional SN cell change), the MN at this time cannot determine which candidate secondary cell the UE will connect to in the future. Moreover, because the UE connects to the secondary cell only subject to the fulfillment of one or more conditions, the MN cannot determine whether the UE will even connect to any of the candidate cells in the future.

Recently, 3GPP has discussed methods for exchanging information related to C-SN configurations between the C-SN and the MN. As one example, the C-SN can transmit to the MN a list of candidate PSCells operated by the C-SN, where the list includes, for each candidate PSCell, a C-SN configuration. However, it is not clear how the MN and/or the C-SN will manage changes to the list of PSCells or to the C-SN configurations. Document Lenovo et al: "Summary of offline discussion on CPAC", 3GPP Draft, R3-215952, vol. RAN WG3, no. Online; 20211101-20211111, 15 November 2021, discloses triggering cancellation of prepared PSCells at a candidate SN, and an MN explicitly indicating PSCells to be cancelled to the target SN.

### SUMMARY

The invention provides a method implemented in a network node in a radio access network, a method implemented in a network node, and a network node as set out in the accompanying claims. A network node operating as a C-SN or an MN can implement the techniques of this disclosure to manage conditional configurations (e.g., C-SN configurations).

A C-SN can inform an MN of configured candidate cells of the C-SN by transmitting a list of candidate cells to the MN (e.g., a CG-CandidateList, where "CG" refers to "Cell Group"). The list may include, for each candidate cell, a conditional configuration for the candidate cell (e.g., a C-SN configuration for a C-PSCell). The MN can store the received conditional configurations and forward the conditional configurations to the UE.

As a specific example, a C-SN can transmit a CG-CandidateList message to the MN, where the CG-CandidateList message includes a list of CG-CandidateInfo information elements (IEs). Each of the CG-CandidateInfo IEs includes a cell identifier and a CG-Config IE. In turn, each CG-Config includes a C-SN configuration.

After transmitting the list to the MN, the C-SN may determine to update the list by adding, removing, or modifying a candidate cell included in the list. The C-SN may make such a determination in response to a request from the MN, or independently from the MN (e.g., based on measurement results for the candidate cells). The C-SN can then transmit an indication of the update to the MN. For example, if removing a cell from the list of candidate cells, the C-SN can transmit, to the MN, a cell ID of the cell to be removed.

Thus, a C-SN notifies the MN of any changes to the list of candidate cells. Based on the received changes to the list, the MN can modify the stored conditional configurations corresponding to the candidate cells. Continuing the example from above, if the MN receives a cell ID of a particular cell included in the list of candidate cells, the MN can determine to release the stored conditional configuration (or, more particularly, the CG-Config IE including the conditional configuration) corresponding to the particular cell.

One example embodiment of these techniques is a method, in a network node operating as a candidate secondary node (C-SN), for managing a conditional procedure that involves a user equipment (UE), the C-SN, and a network node operating as an MN. The method is be implemented by processing hardware and includes: generating a list of candidate cells of the C-SN, the list including, at least one candidate cell for addition, at least one candidate cell for modification, and for each candidate cell of the candidate cells, a respective conditional configuration having a condition to be satisfied for the UE to connect to the candidate cell; transmitting, to the MN, the list; and transmitting, to the MN, an indication of an update to the list.

Another example embodiment of these techniques is a method, in a network node operating as a master node (MN), for managing a conditional procedure that involves a user equipment (UE), the MN, and a network node operating as a C-SN. The method is be implemented by processing hardware and includes: receiving, from the C-SN, a list of candidate cells of the C-SN, the list including, at least one candidate cell for addition, at least one candidate cell for modification, and for each candidate cell of the candidate cells, a respective conditional configuration having a condition to be satisfied for the UE to connect to the candidate cell; storing the one or more conditional configurations corresponding to the one or more candidate cells; receiving, from the C-SN, an indication of an update to the list; and updating the stored one or more conditional configurations in accordance with the update.

A further example embodiment of these techniques is a network node including processing hardware and configured to implement one of the methods above.

### BRIEF DESCRIPTION OF THE DRAWINGS

Fig. 1A is a block diagram of an example system in which a base station and/or a user equipment (UE) can implement the techniques of this disclosure for managing conditional procedures related to a master node (MN) or a secondary node (SN);
Fig. 1B is another block diagram of an example system in which a radio access network (RAN) and a user device can implement the techniques of this disclosure for managing conditional procedures related to an MN or an SN;
Fig. 1C is a block diagram of an example base station including a central unit (CU) and a distributed unit (DU) that can operate in the system of Fig. 1A or Fig. 1B;
Fig. 2 is a block diagram of an example protocol stack according to which the UE of Figs. 1A-1B can communicate with base stations;
Fig. 3A is a messaging diagram of an example scenario where an MN receives and processes one or more SN configurations from a C-SN during a Conditional SN Addition procedure;
Fig. 3B is a messaging diagram of an example scenario where an MN receives and processes one or more SN configurations from a C-SN during an MN-initiated Conditional SN Change procedure;
Fig. 3C is a messaging diagram of an example scenario where an MN receives and processes one or more SN configurations from a C-SN during an SN-initiated Conditional SN Change scenario;
Fig. 3D is a messaging diagram of an example scenario where the MN initiates a modification to the prepared conditional configuration(s) after the MN-initiated Conditional SN Addition or Change or the SN-initiated Conditional SN Change procedure;
Fig. 3E is a messaging diagram of an example scenario where an S-SN initiates a modification to the prepared conditional configuration(s) after the MN-initiated Conditional SN Change or the SN-initiated Conditional SN Change procedure;
Fig. 3F is a messaging diagram of an example scenario where the C-SN initiates a modification to the prepared conditional configuration(s) after MN-initiated Conditional SN Addition or Change or the SN-initiated Conditional SN Change procedure;
Fig. 4A is a flow diagram of an example a method where a C-SN or the CU of the C-SN performs a conditional SN procedure with an MN and later notifies the MN to release a specific conditional configuration using a cell ID of the candidate cell corresponding to the specific conditional configuration;
Fig. 4B is a flow diagram of an example method where a C-SN or the CU of the C-SN performs a conditional SN procedure with an MN and later notifies the MN to release a specific conditional configuration using a position index of the candidate cell corresponding to the specific conditional configuration;
Fig. 4C is a flow diagram of an example method where a C-SN or the CU of the C-SN performs a conditional SN procedure with an MN and later notifies the MN to release a specific conditional configuration using a replacement list excluding the specific conditional configuration;
Fig. 4D is a flow diagram of an example method where a C-SN or the CU of the C-SN performs a conditional SN procedure with an MN and later notifies the MN to release a specific conditional configuration using a release list including a container identifier corresponding to the specific conditional configuration;
Fig. 5A is a flow diagram of an example method where a C-SN or the CU of the C-SN performs a conditional SN procedure with an MN and later notifies the MN to modify a specific conditional configuration using a modification list including a new container;
Fig. 5B is a flow diagram of an example method where a C-SN or the CU of the C-SN performs a conditional SN procedure with an MN and later notifies the MN to modify a specific conditional configuration using a replacement list including a new container;
Fig. 5C is a flow diagram of an example method where a C-SN or the CU of the C-SN performs a conditional SN procedure with an MN and later notifies the MN to modify a specific conditional configuration using a modification list including a new container having a container identifier;
Fig. 6A is a flow diagram of an example method where an MN performs an SN procedure with a C-SN and later releases a specific conditional configuration based on a cell ID received from the C-SN;
Fig. 6B is a flow diagram of an example method where an MN performs an SN procedure with a C-SN and later releases a specific conditional configuration based on a position index identifying a candidate cell and received from the C-SN;
Fig. 6C is a flow diagram of an example method where an MN performs an SN procedure with a C-SN and later releases a specific conditional configuration based on a container identifier received from the C-SN;
Fig. 7A is a flow diagram of an example method where an MN performs an SN procedure with a C-SN and later modifies (e.g., replaces or adds to) the prepared conditional configuration(s) based on a cell ID received from the C-SN;
Fig. 7B is a flow diagram of an example method where an MN performs an SN procedure with a C-SN and later modifies prepared conditional configuration(s) based on a container ID received from the C-SN;
Fig. 8 is a flow diagram of an example method where an MN performs an SN procedure with an SN and later modifies prepared conditional configuration(s) using a replacement list received from a C-SN;
Fig. 9 is a flow diagram of an example method for a conditional procedure, which can be implemented in a C-SN; and
Fig. 10 is a flow diagram of an example method for managing a conditional procedure, which can be implemented in an MN.

### DETAILED DESCRIPTION OF THE DRAWINGS

As discussed in detail below, a UE and/or one or more base stations manage conditional procedures, such as conditional PSCell addition or change (CPAC). This disclosure may also refer to a conditional PSCell addition procedure and a conditional PSCell change procedure separately using the acronyms CPA and CPC, respectively.

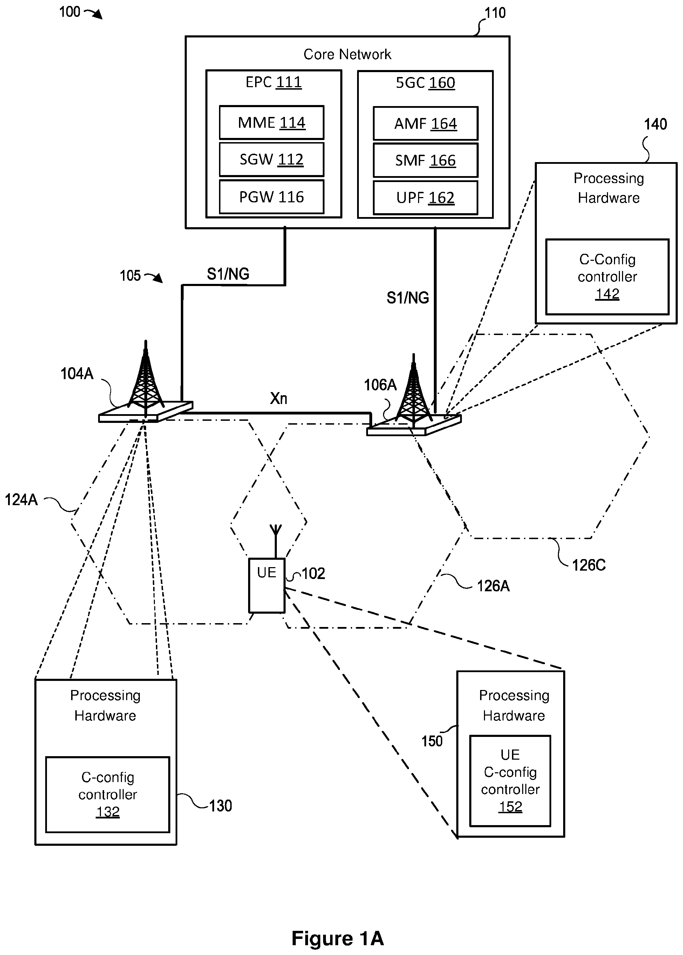

Referring first to Fig. 1A, an example wireless communication system 100 includes a UE 102, a base station (BS) 104A, a base station 106A, and a core network (CN) 110. The base stations 104A and 106A can operate in a RAN 105 connected to the same core network (CN) 110. The CN 110 can be implemented as an evolved packet core (EPC) 111 or a fifth generation (5G) core (5GC) 160, for example.

Among other components, the EPC 111 can include a Serving Gateway (SGW) 112, a Mobility Management Entity (MME) 114, and a Packet Data Network Gateway (PGW) 116. The SGW 112 in general is configured to transfer user-plane packets related to audio calls, video calls, Internet traffic, etc., and the MME 114 is configured to manage authentication, registration, paging, and other related functions. The PGW 116 provides connectivity from the UE to one or more external packet data networks, e.g., an Internet network and/or an Internet Protocol (IP) Multimedia Subsystem (IMS) network. The 5GC 160 includes a User Plane Function (UPF) 162 and an Access and Mobility Management Function (AMF) 164, and/or Session Management Function (SMF) 166. Generally speaking, the UPF 162 is configured to transfer user-plane packets related to audio calls, video calls, Internet traffic, etc.; the AMF 164 is configured to manage authentication, registration, paging, and other related functions; and the SMF 166 is configured to manage PDU sessions.

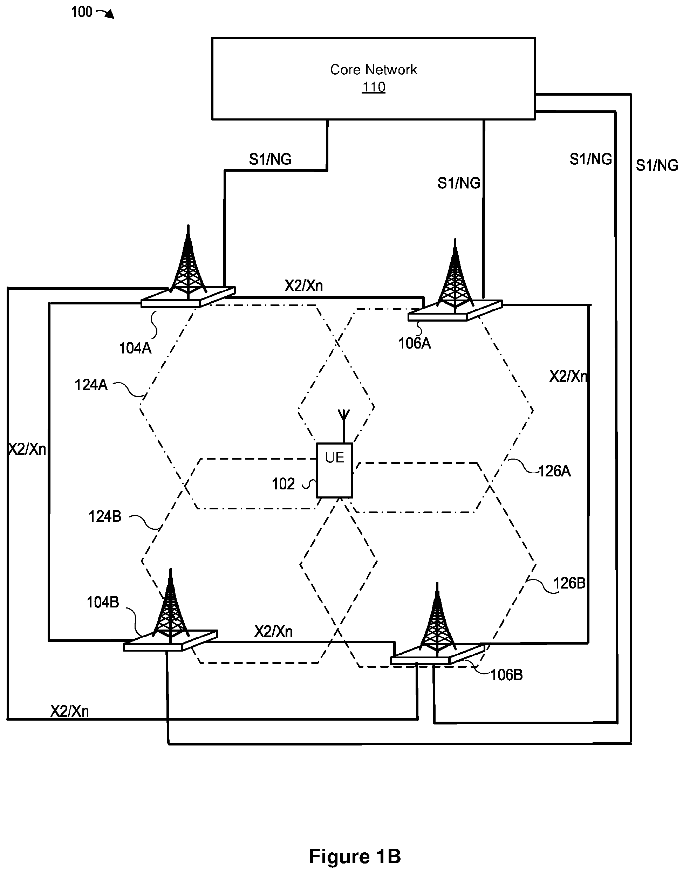

As illustrated in Fig. 1A, the base station 104A supports a cell 124A, and the base station 106A supports a cell 126A. Further, each of the base stations 104A, 106A may support more than one cell. The base station 106A, for example, may also support a cell 126C. The cells 124A and 126A can partially overlap, so that the UE 102 can communicate in DC with the base station 104A and the base station 106A operating as a master node (MN) and a secondary node (SN), respectively. To directly exchange messages during DC scenarios and other scenarios discussed below, the MN 104A and the SN 106A can support an X2 or Xn interface. In general, the CN 110 can connect to any suitable number of base stations supporting NR cells and/or EUTRA cells. An example configuration in which the EPC 110 is connected to additional base stations is discussed below with reference to Fig. 1B.

The base station 104A is equipped with a transceiver and processing hardware 130 that can include one or more general-purpose processors such as CPUs and non-transitory computer-readable memory storing machine-readable instructions executable on the one or more general-purpose processors, and/or special-purpose processing units. The processing hardware 130 in an example implementation includes a conditional configuration controller 132 configured to manage conditional configuration for one or more conditional procedures such as Conditional Handover (CHO), Conditional PSCell Addition or Change (CPAC), or Conditional SN Additional or Change (CSAC). when the base station 104A operates as an MN.

The base station 106A is equipped with a transceiver and processing hardware 140 that can also include one or more general-purpose processors such as CPUs and non-transitory computer-readable memory storing machine-readable instructions executable on the one or more general-purpose processors, and/or special-purpose processing units. The processing hardware 140 in an example implementation includes a conditional configuration controller 142 configured to manage conditional configurations for one or more conditional procedures such as CHO, CPAC, or CSAC, when the base station 106A operates as an SN.

Still referring to Fig. 1A, the UE 102 is equipped with a transceiver and processing hardware 150 that can include one or more general-purpose processors such as CPUs and non-transitory computer-readable memory storing machine-readable instructions executable on the one or more general-purpose processors, and/or special-purpose processing units. The processing hardware 150 in an example implementation includes a UE conditional configuration controller 152 configured to manage conditional configuration for one or conditional procedures.

More particularly, the conditional configuration controllers 132, 142, and 152 can implement at least some of the techniques discussed with reference to the messaging and flow diagrams below. Although Fig. 1A illustrates the conditional configuration controllers 132 and 142 as separate components, in at least some of the scenarios the base stations 104A and 106A can have similar implementations and in different scenarios operate as MN or SN nodes. In these implementations, each of the base stations 104A and 106A can implement both the conditional configuration controller 132 and the conditional configuration controller 142 to support MN and SN functionality, respectively.

In operation, the UE 102 can use a radio bearer (e.g., a DRB or an SRB) that at different times terminates at the MN 104A or the SN 106A. The UE 102 can apply one or more security keys when communicating on the radio bearer, in the uplink (from the UE 102 to a BS) and/or downlink (from a base station to the UE 102) direction. The UE in some cases can use different RATs to communicate with the base stations 104A and 106A. Although the examples below may refer specifically to specific RAT types, 5G NR or EUTRA, in general the techniques of this disclosure also can apply to other suitable radio access and/or core network technologies.

Fig. 1B depicts additional base stations 104B and 106B, which may be included in the wireless communication system 100. The UE 102 initially connects to the base station 104A. The BSs 104B and 106B may have similar processing hardware as the base station 106A. The UE 102 initially connects to the base station 104A.

In some scenarios, the base station 104A can perform immediate SN addition to configure the UE 102 to operate in dual connectivity (DC) with the base station 104A (via a PCell) and the base station 106A (via a PSCell other than cell 126A). The base stations 104A and 106A operate as an MN and an SN for the UE 102, respectively. The UE 102 in some cases can operate using the MR-DC connectivity mode, e.g., communicate with the base station 104A using 5G NR and communicate with the base station 106A using EUTRA, or communicate with the base station 104A using EUTRA and communicate with the base station 106A using 5G NR. Multi-connectivity coordination can help the two base stations coordinate shared UE capabilities including operational frequencies (e.g., band combinations, frequency ranges), UE measurements and reporting (e.g., intra-frequency measurements, inter-frequency measurements, inter-RAT measurements, measurement gaps), reception timing (e.g., DRX configurations, offset timing), and uplink power control (e.g., power headroom, maximum transmit power).

At some point, the MN 104A can perform an immediate SN change to change the SN of the UE 102 from the base station 106A (source SN, or "S-SN") to the base station 104B (target SN, or "T-SN") while the UE 102 is communicating in DC with the MN 104A and the S-SN 106A. In another scenario, the SN 106A can perform an immediate PSCell change to change the PSCell of the UE 102 to the cell 126A. In one implementation, the SN 106A can transmit a configuration changing the PSCell to cell 126A to the UE 102 via a signaling radio bearer (SRB) (e.g., SRB3) for the immediate PSCell change. In another implementation, the SN 106A can transmit a configuration changing the PSCell to the cell 126A to the UE 102 via the MN 104A for the immediate PSCell change. The MN 104A may transmit the configuration immediately changing the PSCell to the cell 126A to the UE 102 via SRB1. Extending multi-connectivity coordination can help the newly-added base station coordinate shared UE capabilities.

In other scenarios, the base station 104A can perform a conditional SN Addition procedure to first configure the base station 106B as a C-SN for the UE 102, i.e., conditional SN addition or change (CSAC). At this time, the UE 102 can be in single connectivity (SC) with the base station 104A or in DC with the base station 104A and the base station 106A. If the UE 102 is in DC with the base station 104A and the base station 106A, the MN 104A may determine to perform the conditional SN Addition procedure in response to a request received from the base station 106A or in response to one or more measurement results received from the UE 102 (e.g., extracted from a UE measurement report) or obtained by the MN 104A from measurements on signals (e.g., sounding reference signal (SRS) or uplink demodulation reference signal (DMRS)) received from the UE 102. In contrast to the immediate SN Addition case discussed above, the UE 102 does not immediately attempt to connect to the C-SN 106B. In this scenario, the base station 104A again operates as an MN, but the base station 106B initially operates as a C-SN rather than an SN.

More particularly, when the UE 102 receives a configuration for the C-SN 106B, the UE 102 does not connect to the C-SN 106B until the UE 102 has determined that a certain condition is satisfied (the UE 102 in some cases can consider multiple conditions, but for convenience only the discussion below refers to a single condition). Before the condition is satisfied, multi-connectivity coordination is not necessary; however, it will be helpful as soon as a C-SN becomes connected. When the UE 102 determines that the condition has been satisfied, the UE 102 connects to the C-SN 106B, so that the C-SN 106B begins to operate as the SN 106B for the UE 102. Thus, while the base station 106B operates as a C-SN rather than an SN, the base station 106B is not yet connected to the UE 102, and accordingly is not yet servicing the UE 102. In some implementations, the UE 102 may disconnect from the SN 106A to connect to the C-SN 106B.

In yet other scenarios, the UE 102 is in DC with the MN 104A (via a PCell) and SN 106A (via a PSCell other than cell 126A and not shown in Fig. 1A). The SN 106A can perform conditional PSCell addition or change (CPAC) to configure a candidate PSCell (C-PSCell) 126A for the UE 102. If the UE 102 is configured with a signaling radio bearer (SRB) (e.g., SRB3) to exchange RRC messages with the SN 106A, the SN 106A may transmit a configuration for the C-PSCell 126A to the UE 102 via the SRB, e.g., in response to one or more measurement results, which may be received from the UE 102 via the SRB or via the MN 104A or may be obtained by the SN 106A from measurements on signals received from the UE 102. In case of via the MN 104A, the MN 104A receives the configuration for the C-PSCell 126A. In contrast to the immediate PSCell change case discussed above, the UE 102 does not immediately disconnect from the PSCell and attempt to connect to the C-PSCell 126A.

More particularly, when the UE 102 receives a configuration for the C-PSCell 126A, the UE 102 does not connect to the C-PSCell 126A until the UE 102 has determined that a certain condition is satisfied (the UE 102 in some cases can consider multiple conditions, but for convenience only the discussion below refers to a single condition). When the UE 102 determines that the condition has been satisfied, the UE 102 connects to the C-PSCell 126A, so that the C-PSCell 126A begins to operate as the PSCell 126A for the UE 102. Thus, while the cell 126A operates as a C-PSCell rather than a PSCell, the SN 106A may not yet connect to the UE 102 via the cell 126A. In some implementations, the UE 102 may disconnect from the PSCell to connect to the C-PSCell 126A.

In some scenarios, the condition associated with CSAC or CPAC can be signal strength/quality, which the UE 102 detects on the C-PSCell 126A of the SN 106A or on a C-PSCell 126B of C-SN 106B, exceeding a certain threshold or otherwise corresponding to an acceptable measurement. For example, when the one or more measurement results the UE 102 obtains on the C-PSCell 126A are above a threshold configured by the MN 104A or the SN 106A or above a pre-determined or pre-configured threshold, the UE 102 determines that the condition is satisfied. When the UE 102 determines that the signal strength/quality on the C-PSCell 126A of the SN 106A is sufficiently good (again, measured relative to one or more quantitative thresholds or other quantitative metrics), the UE 102 can perform a random access procedure on the C-PSCell 126A with the SN 106A to connect to the SN 106A. After the UE 102 successfully completes the random access procedure on the C-PSCell 126A, the C-PSCell 126A becomes a PSCell 126A for the UE 102. The SN 106A then can start communicating data (user-plane data or control-plane data) with the UE 102 through the PSCell 126A. In another example, when the one or more measurement results the UE 102 obtains on the C-PSCell 126B are above a threshold configured by the MN 104A or the C-SN 106B or above a pre-determined or pre-configured threshold, the UE 102 determines that the condition is satisfied. When the UE 102 determines that the signal strength/quality on the C-PSCell 126B of the C-SN 106B is sufficiently good (again, measured relative to one or more quantitative thresholds or other quantitative metrics), the UE 102 can perform a random access procedure on the C-PSCell 126B with the C-SN 106B to connect to the C-SN 106B. After the UE 102 successfully completes the random access procedure on the C-PSCell 126B, the C-PSCell 126B becomes a PSCell 126B for the UE 102 and the C-SN 106B becomes an SN 106B. The SN 106B then can start communicating data (user-plane data or control-plane data) with the UE 102 through the PSCell 126B.

In various configurations of the wireless communication system 100, the base station 104A can be implemented as a master eNB (MeNB) or a master gNB (MgNB), and the base station 106A or 106B can be implemented as a secondary gNB (SgNB) or a candidate SgNB (C-SgNB). The UE 102 can communicate with the base station 104A and the base station 106A or 106B (106A/B) via the same RAT such as EUTRA or NR, or different RATs. When the base station 104A is an MeNB and the base station 106A is an SgNB, the UE 102 can be in EUTRA-NR DC (EN-DC) with the MeNB and the SgNB. In this scenario, the MeNB 104A may or may not configure the base station 106B as a C-SgNB to the UE 102. In this scenario, the SgNB 106A may configure cell 126A as a C-PSCell to the UE 102. When the base station 104A is an MeNB and the base station 106A is a C-SgNB for the UE 102, the UE 102 can be in SC with the MeNB. In this scenario, the MeNB 104A may or may not configure the base station 106B as another C-SgNB to the UE 102.

In some cases, an MeNB, an SeNB or a C-SgNB is implemented as an ng-eNB rather than an eNB. When the base station 104A is a Master ng-eNB (Mng-eNB) and the base station 106A is a SgNB, the UE 102 can be in next generation (NG) EUTRA-NR DC (NGEN-DC) with the Mng-eNB and the SgNB. In this scenario, the MeNB 104A may or may not configure the base station 106B as a C-SgNB to the UE 102. In this scenario, the SgNB 106A may configure cell 126A as a C-PSCell to the UE 102. When the base station 104A is an Mng-NB and the base station 106A is a C-SgNB for the UE 102, the UE 102 can be in SC with the Mng-NB. In this scenario, the Mng-eNB 104A may or may not configure the base station 106B as another C-SgNB to the UE 102.

When the base station 104A is an MgNB and the base station 106A/B is an SgNB, the UE 102 may be in NR-NR DC (NR-DC) with the MgNB and the SgNB. In this scenario, the MeNB 104A may or may not configure the base station 106B as a C-SgNB to the UE 102. In this scenario, the SgNB 106A may configure cell 126A as a C-PSCell to the UE 102. When the base station 104A is an MgNB and the base station 106A is a C-SgNB for the UE 102, the UE 102 may be in SC with the MgNB. In this scenario, the MgNB 104A may or may not configure the base station 106B as another C-SgNB to the UE 102.

When the base station 104A is an MgNB and the base station 106A/B is a Secondary ng-eNB (Sng-eNB), the UE 102 may be in NR-EUTRA DC (NE-DC) with the MgNB and the Sng-eNB. In this scenario, the MgNB 104A may or may not configure the base station 106B as a C-Sng-eNB to the UE 102. In this scenario, the Sng-eNB 106A may configure cell 126A as a C-PSCell to the UE 102. When the base station 104A is an MgNB and the base station 106A is a candidate Sng-eNB (C-Sng-eNB) for the UE 102, the UE 102 may be in SC with the MgNB. In this scenario, the MgNB 104A may or may not configure the base station 106B as another C-Sng-eNB to the UE 102.

The base stations 104A, 106A, and 106B can connect to the same core network (CN) 110, which can be an evolved packet core (EPC) 111 or a fifth-generation core (5GC) 160. The base station 104A can be implemented as an eNB supporting an S1 interface for communicating with the EPC 111, an ng-eNB supporting an NG interface for communicating with the 5GC 160, or as a base station that supports the NR radio interface as well as an NG interface for communicating with the 5GC 160. The base station 106A can be implemented as an EN-DC gNB (en-gNB) with an S1 interface to the EPC 111, an en-gNB that does not connect to the EPC 111, a gNB that supports the NR radio interface as well as an NG interface to the 5GC 160, or a ng-eNB that supports an EUTRA radio interface as well as an NG interface to the 5GC 160. To directly exchange messages during the scenarios discussed below, the base stations 104A, 106A, and 106B can support an X2 or Xn interface.

As illustrated in Fig. 1B, the base station 104A supports a cell 124A, the base station 104B supports a cell 124B, the base station 106A supports a cell 126A, and the base station 106B supports a cell 126B. The cells 124A and 126A can partially overlap, as can the cells 124A and 124B, so that the UE 102 can communicate in DC with the base station 104A (operating as an MN) and the base station 106A (operating as an SN) and, upon completing an SN change, with the base station 104A (operating as MN) and the SN 104B. More particularly, when the UE 102 operates in DC with the base station 104A and the base station 106A, the base station 104A operates as an MeNB, an Mng-eNB, or an MgNB, and the base station 106A operates as an SgNB or an Sng-eNB. The cells 124A and 126B can partially overlap. When the UE 102 is in SC with the base station 104A, the base station 104A operates as an MeNB, an Mng-eNB or an MgNB, and the base station 106B operates as a C-SgNB or a C-Sng-eNB. When the UE 102 operates in DC with the base station 104A and the base station 106A, the base station 104A operates as an MeNB, an Mng-eNB or an MgNB, the base station 106A operates as an SgNB or an Sng-eNB, and the base station 106B operates as a C-SgNB or a C-Sng-eNB.

In general, the wireless communication network 100 can include any suitable number of base stations supporting NR cells and/or EUTRA cells. More particularly, the EPC 111 or the 5GC 160 can be connected to any suitable number of base stations supporting NR cells and/or EUTRA cells. Although the examples below refer specifically to specific CN types (EPC, 5GC) and RAT types (5G NR and EUTRA), in general the techniques of this disclosure also can apply to other suitable radio access and/or core network technologies such as sixth generation (6G) radio access and/or 6G core network or 5G NR-6G DC.

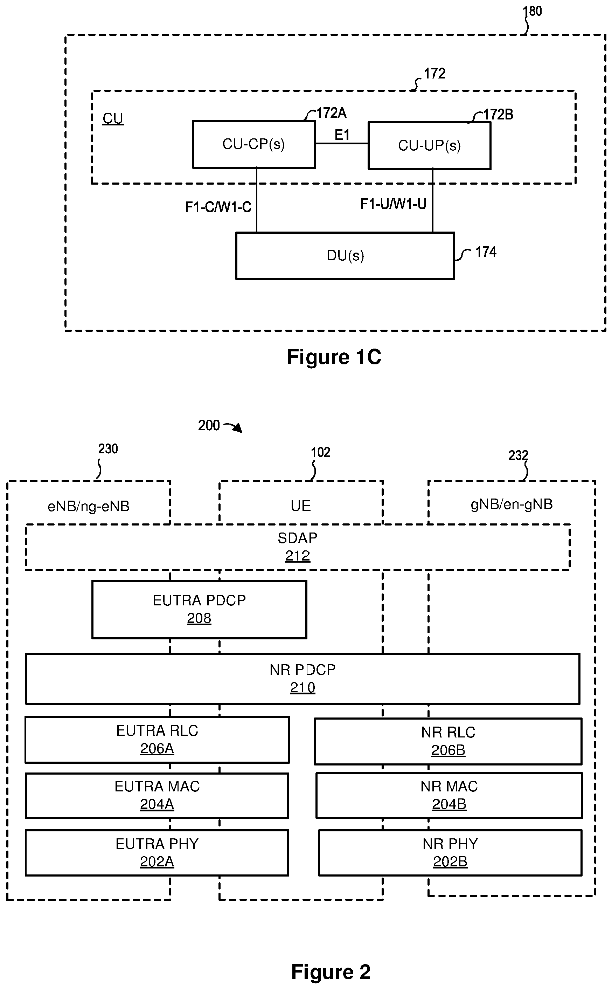

Fig. 1C depicts an example distributed implementation of a base station 180 which can be for example the base station 104A, 104B, 106A, or 106B. The base station in this implementation can include a central unit (CU) 172 and one or more distributed units (DUs) 174. The CU 172 is equipped with processing hardware that can include one or more general-purpose processors such as CPUs and non-transitory computer-readable memory storing machine-readable instructions executable on the one or more general-purpose processors, and/or special-purpose processing units. In one example, the CU 172 is equipped with the processing hardware 130. In another example, the CU 172 is equipped with the processing hardware 140. The processing hardware 140 in an example implementation includes an (C-)SN RRC controller configured to manage or control one or more RRC configurations and/or RRC procedures when the base station 106A operates as an SN or a candidate SN (C-SN). The base station 106B can have hardware same as or similar to the base station 106A. The DU 174 is also equipped with processing hardware that can include one or more general-purpose processors such as CPUs and non-transitory computer-readable memory storing machine-readable instructions executable on the one or more general-purpose processors, and/or special-purpose processing units. In some examples, the processing hardware in an example implementation includes a medium access control (MAC) controller configured to manage or control one or more MAC operations or procedures (e.g., a random access procedure) and a radio link control (RLC) controller configured to manage or control one or more RLC operations or procedures when the base station 106A operates as an MN, an SN or a candidate SN (C-SN). The processing hardware may include further a physical layer controller configured to manage or control one or more physical layer operations or procedures.

Fig. 2 illustrates, in a simplified manner, an example protocol stack 200 according to which the UE 102 can communicate with an eNB/ng-eNB 230 or a gNB 233 (e.g., one or more of the base stations 104, 106).

In the example stack 200, a physical layer (PHY) 202A of EUTRA provides transport channels to the EUTRA MAC sublayer 204A, which in turn provides logical channels to the EUTRA RLC sublayer 206A. The EUTRA RLC sublayer 206A in turn provides RLC channels to a EUTRA PDCP sublayer 208 and, in some cases, to an NR PDCP sublayer 210. Similarly, the NR PHY 202B provides transport channels to the NR MAC sublayer 204B, which in turn provides logical channels to the NR RLC sublayer 206B. The NR RLC sublayer 206B in turn provides data transfer services to the NR PDCP sublayer 210. The NR PDCP sublayer 210 in turn can provide data transfer services to Service Data Adaptation Protocol (SDAP) 212 or a radio resource control (RRC) sublayer (not shown in Fig. 2). The UE 102, in some implementations, supports both the EUTRA and the NR stack, as shown in Fig. 2, to support handover between EUTRA and NR base stations and/or to support DC over EUTRA and NR interfaces. Further, as illustrated in Fig. 2, the UE 102 can support layering of NR PDCP 210 over EUTRA RLC 206A, and SDAP sublayer 212 over the NR PDCP sublayer 210.

The EUTRA PDCP sublayer 208 and the NR PDCP sublayer 210 receive packets (e.g., from an Internet Protocol (IP) layer, layered directly or indirectly over the PDCP layer 208 or 210) that can be referred to as service data units (SDUs), and output packets (e.g., to the RLC layer 206A or 206B) that can be referred to as protocol data units (PDUs). Except where the difference between SDUs and PDUs is relevant, this disclosure for simplicity refers to both SDUs and PDUs as "packets."

On a control plane, the EUTRA PDCP sublayer 208 and the NR PDCP sublayer 210 can provide signaling radio bearers (SRBs) or an RRC sublayer (not shown in Fig. 2) to exchange RRC messages or non-access-stratum (NAS) messages, for example. On a user plane, the EUTRA PDCP sublayer 208 and the NR PDCP sublayer 210 can provide data radio bearers (DRBs) to support data exchange. Data exchanged on the NR PDCP sublayer 210 can be SDAP PDUs, Internet Protocol (IP) packets, or Ethernet packets.

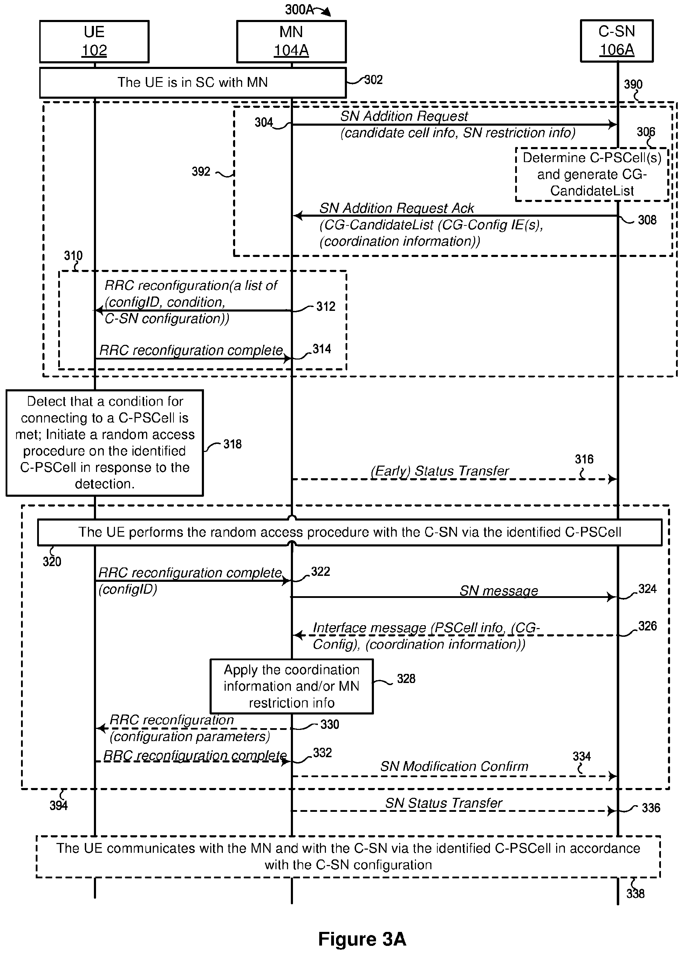

Next, several example scenarios in which a UE and/or a RAN perform the techniques of this disclosure for supporting conditional procedures are discussed with reference to Figs. 3A-3F. Generally speaking, similar events in Figs. 3A-3F are labeled with the same reference numbers, with differences discussed below where appropriate.

Referring first to Fig. 3A, in a scenario 300A, an MN receives and processes one or more SN configurations from the SN during a conditional SN addition procedure. In the scenario 300A, the base station 104A in a scenario 300A operates as an MN, and the base station 106A operates as a C-SN. Initially, the UE 102 operates 302 in single connectivity (SC) with the MN 104A. While in SC, the UE 102 communicates UL PDUs and/or DL PDUs with the MN 104A (e.g., via a PCell 124A) in accordance with an MN configuration.

Later in time, the MN 104A determines to configure the base station 106A as a C-SN for conditional PSCell addition (CPA). The MN 104A can make this determination based on measurement result(s) from the UE 102, for example. In some implementations, the MN 104A can detect or estimate that the UE 102 is moving toward coverage (i.e., one or more cells) of the base station 106A based on uplink signals received from the UE 102 or positioning measurement result(s) received from the UE 102. In response to the determination, the MN 104A sends 304 an *SN Addition Request* message including a Conditional PSCell Addition Information Request IE to the C-SN 106A. In some implementations, the Conditional PSCell Addition Information Request IE further includes a CPAC indicator to indicate CPAC-initiation and a Maximum Number of PSCells To Prepare IE/field. The MN 104A can generate candidate cell information including the measurement result(s) of the one or more cells and include the candidate cell information in the *SN Addition Request* message. Furthermore, the MN 104A can determine SN restriction information to restrict (values of) configuration parameters that the C-SN 106A can configure for the UE 102. The MN 104A can include the SN restriction information in the *SN Addition Request* message. The MN 104A may determine MN restriction information to restrict (values of) configuration parameters that the MN 104A can configure for the UE 102 when determining the SN restriction information.

In response to receiving 304 the *SN Addition Request* message with CPAC indication, the C-SN 106A determines 306 one or more C-PSCells (C-PSCell(s)) and generates an inter-node RRC message CG-CandidateList to include one or more C-SN configurations (C-SN configuration(s)), each C-SN configuration associated with a particular C-PSCell of the C-PSCell(s), for the UE 102. For example, the C-PSCells may be the cell 126A and the cell 126C. In some implementations, the C-SN 106A determines the C-PSCell(s) and the C-SN configuration(s) taking into account the candidate cell information and the SN restriction information. The CG-CandidateList includes an addition list of CG-CandidateInfo IE(s), where each corresponds to a C-PSCell. Each CG-CandidateInfo IE in the addition list includes C-PSCell information for a C-PSCell (e.g., SSB frequency information (e.g., ARFCN-ValueNR) and the physical Cell ID (PCI) or Cell Global ID (CGI)) and a CG-Config IE. Each CG-Config IE includes a C-SN configuration for a corresponding C-PSCell and optional parameters for the MN to prepare conditional configuration(s). In some implementations, the CG-CandidateInfo IE includes a CG-CandidateInfo ID (e.g., cg-CandidateInfoId or CG-CandidateInfoId), which identifies each CG-CandidateInfo IE or a CG-Config IE in each CG-CandidateInfo IE. The CG-CandidateInfo ID(s) can be used by the C-SN 106A and the MN 104A for management of CG-CandidateInfo IE(s) in the addition list.

The following are example implementations of the CG-CandidateList. The addition list can be a *cg-CandidateList-r17* or a *cg-CandidateToAddModList-r17* described below.

### Example implementation 1:

cg-CandidateList: Contains information regarding a list of candidate target cells for Conditional PSCell Addition (CPA) or Conditional PSCell Change (CPC).

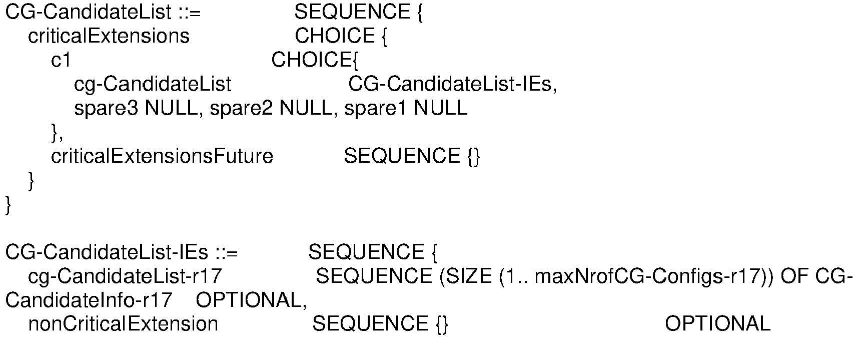

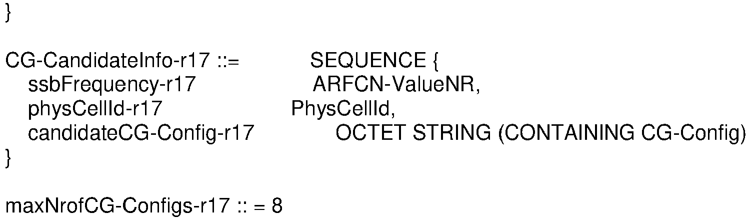

### Example implementation 2:

cg-CandidateList: Contains information regarding a list of candidate target cells for Conditional PSCell Addition (CPA) or Conditional PSCell Change (CPC).
cg-CandidateToReleaseList: Contains a list of physical cell IDs of candidate target cells for CPA or CPC to be released.

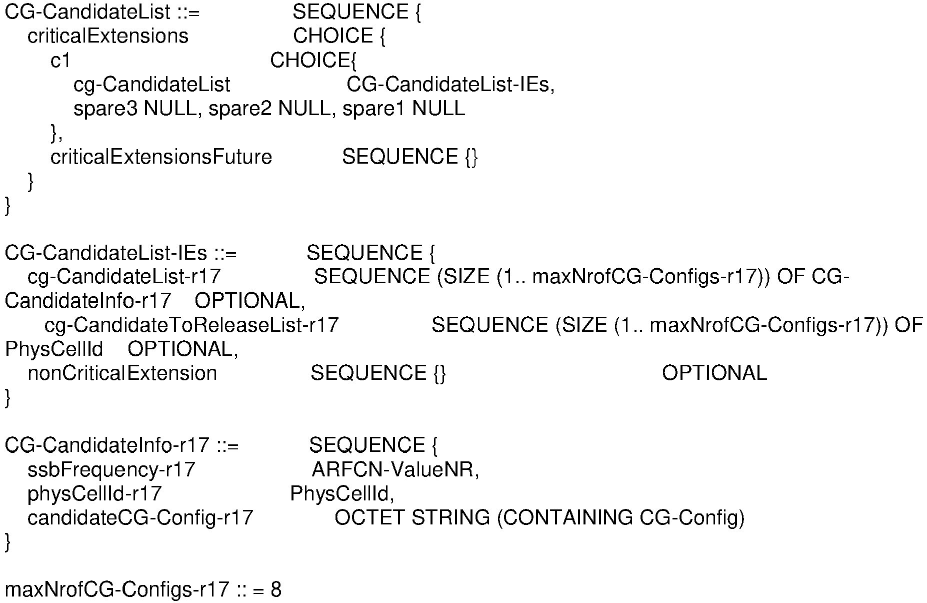

### Example implementation 3:

cg-CandidateList: Contains information regarding a list of candidate target cells for Conditional PSCell Addition (CPA) or Conditional PSCell Change (CPC).
cg-CandidateToReleaseList: Contains a list of position index/indices indicating candidate target cells for CPA or CPC to be released.

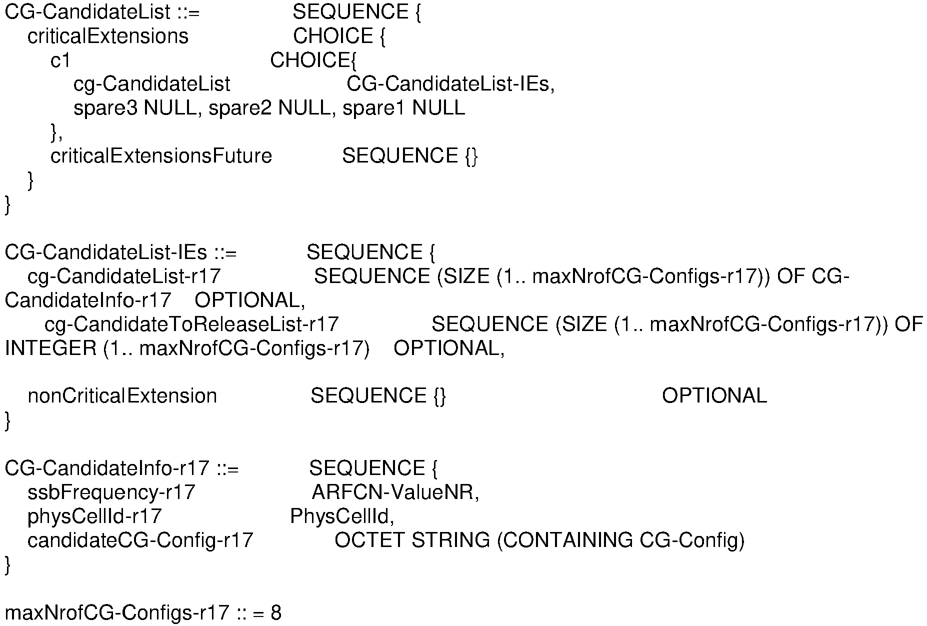

### Example implementation 4:

cg-CandidateToAddModList: Contains information regarding a list of candidate target cells for CPA or CPC to be added or modified.
cg-CandidateToReleaseList: Contains a list of CG-candidateInfoId IE(s) indicating candidate target cells for CPA or CPC to be released.

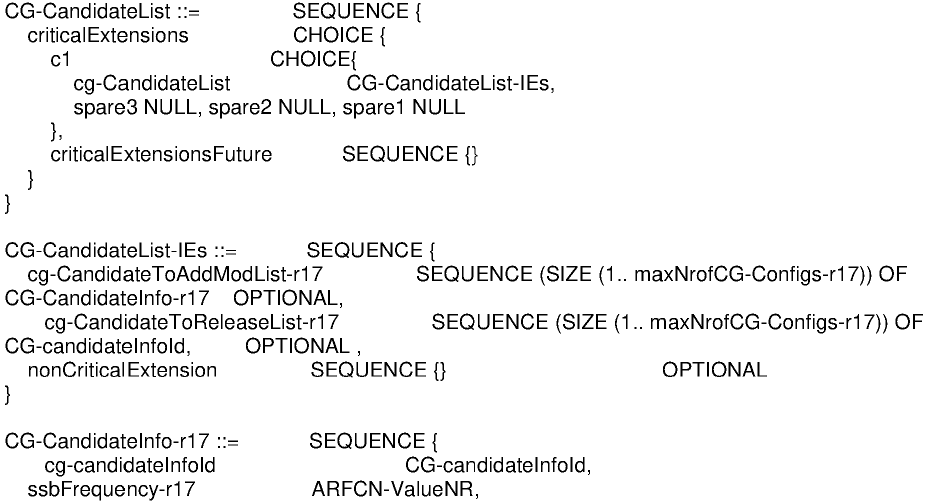

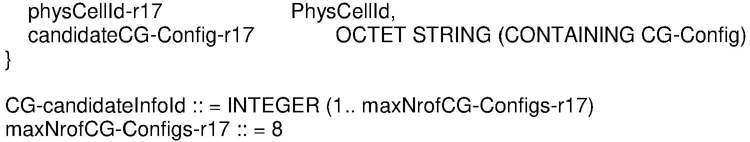

In some implementations, the *maxNrofCG-Configs-r17* is a constant value (e.g., 8) and can be changed to another name (e.g., *maxNrofCG-CandidateInfos-r17*)*.* The constant value can be changed to a positive value, e.g., 4 or 16 depending on the maximum number of CG-Config IEs that the C-SN 106A can configure for the UE 102. In other implementations, the *maxNrofCondCells-r16* defined in 3GPP specification 38.331 e.g., v16.6.0 can be used to replace the *maxNrofCG-Configs-r17.*

The C-SN 106A transmits 308 an *SN Addition Request Acknowledge* message including the CG-CandidateList to the MN 104A. In further implementations, the C-SN 106A can generate coordination information and include the coordination information in the *SN Addition Request Acknowledge* message. In some implementations, the coordination information includes one or more coordination parameters. In some implementations, the C-SN 106A can include the one or more coordination parameters in the CG-Config(s) in the CG-CandidateList and/or the *SN Addition Request Acknowledge* message. For example, the coordination information can include coordination parameters such as a *Resource Coordination Info* IE (e.g., *SgNB Resource Coordination Information* IE or *MR-DC Resource Coordination Information* IE) associated to a particular C-PSCell, one or more power coordination parameters (e.g., powerCoordination-FR1 and/or powerCoordination-FR2), or a discontinuous reception (DRX) configuration (e.g., DRX-Info or DRX-Info2). The coordination information can include coordination information for each of the C-PSCell(s). In some implementations, the C-SN 106A includes SN restriction information in the *SN Addition Request Acknowledge* message, which the MN 104A may use to determine the MN restriction information. The events 304, 306, 308 collectively define a conditional SN addition preparation procedure 392.

After receiving 308 the *SN Addition Request Acknowledge* message including the CG-CandidateList, the MN 104A can assign a particular configuration ID (e.g., *condReconfigId* or *CondReconfigurationId)* to each of the C-SN configuration(s) in the CG-Config IE(s). For example, in cases where the CG-Config IE(s) include the C-SN configurations 1, *..., N* (*N* is an integer larger than zero), the MN 104A can assign configuration ID 1, ..., *N* for the C-SN configurations 1, ..., *N*, respectively. In such cases, the MN 104A can include the configuration ID 1, ..., *N* in the RRC reconfiguration message. In such implementations, the MN 104A can include, in the RRC reconfiguration, trigger condition configurations 1, ..., *N* for the C-SN configurations 1, ..., *N*, respectively. The MN 104A can generate the trigger condition configurations (e.g., condExecutionCond). Each of the trigger condition configurations can configure one or more conditions that triggers the UE 102 to connect to the C-SN 106A via a particular C-PSCell configured in a particular C-SN configuration. In some implementations, the MN 104A can generate conditional (re)configuration fields/IEs (e.g., CondReconfigToAddMod) 1, ..., *N*, including the C-SN configurations (e.g., condRRCReconfig) 1, ..., *N,* the configuration ID (e.g., condReconfigId) 1, ..., *N,* and the trigger condition configurations (e.g., condExecutionCond) 1, ..., *N*, respectively, and transmit 312 the RRC reconfiguration message including the conditional (re)configuration fields/IEs to the UE 102. In other implementations, the MN 104A can generate RRC container messages (e.g., *RRCConnectionReconfiguration* messages or *RRCReconfiguration* messages) 1, ..., *N* including the C-SN configurations (e.g., condRRCReconfig) 1, ... *N*, respectively, generate conditional (re)configuration fields/IEs (e.g., CondReconfigToAddMod) 1, ..., *N* including the RRC container messages 1, ..., *N,* the configuration ID (e.g., condReconfigId) 1, ..., *N*, and the condition configurations (e.g., condExecutionCond) 1, ..., *N*, respectively, and transmit 312 the RRC reconfiguration message including the conditional configuration fields/IEs to the UE 102.

The MN 104A may include the C-SN configuration(s) in an RRC reconfiguration message (e.g., *RRCConnectionReconfiguration* message or *RRCReconfiguration* message), and transmit 312 the RRC reconfiguration message to the UE 102. In response, the UE 102 transmits 314 an RRC reconfiguration complete message (e.g., *RRCConnectionReconfigurationComplete* message or *RRCReconfigurationComplete* message) to the MN 104A. The events 312 and 314 collectively define an RRC reconfiguration procedure 310.

In some implementations, the MN 104A transmits an SN message (e.g., *SN Reconfiguration Complete* message, not shown) to the C-SN 106A to indicate that the UE 102 received the C-SN configuration(s), in response to or after receiving the RRC reconfiguration complete message. In other implementations, the MN 104A refrains from sending an SN message to the C-SN 106A to indicate that the UE 102 received the C-SN configuration(s). Events 304, 306, 308, 312 and 314 collectively define an MN-initiated conditional SN change (addition) preparation procedure 390, which includes the RRC reconfiguration steps not covered in procedure 392.

After receiving 314 the RRC reconfiguration complete message or an acknowledgement (e.g., RLC acknowledgement or hybrid automatic repeat request (HARQ) acknowledgement) for a PDU (e.g., RLC PDU or MAC PDU) including the RRC reconfiguration message, the MN 104A can (determine to) send 316 an *Early Status Transfer* message to the C-SN 106A to transfer a COUNT value of the first downlink SDU that the MN 104A forwards to the C-SN 106A or a COUNT value for discarding of already forwarded downlink SDUs for each of DRB(s) of the UE 102. The *Early Status Transfer* message may be an Early Sequence Number (SN) Status Transfer message, where "SN" in this context refers to sequence number rather than secondary node. The MN 104A can send 316 the *Early Status Transfer* message without receiving an interface message indicating the UE 102 connects to the C-SN 106A.

The UE 102 may use the one or more conditions to determine whether to connect to the one of the C-PSCell(s). If the UE 102 detects 318 that a condition for connecting to a C-PSCell is satisfied, the UE 102 connects to the C-PSCell. That is, the condition (or "triggering condition") triggers the UE 102 to connect to the C-PSCell or to execute the C-SN configuration concerning the C-PSCell. However, if the UE 102 does not detect that the condition is satisfied, the UE 102 does not connect to the C-PSCell. In response to the detection, the UE 102 initiates a random access procedure on the C-PSCell. In response to the initiation, the UE 102 performs 320 the random access procedure with the C-SN 106A via the C-PSCell. In response to the detection or initiation 318, the UE 102 sends 322 an RRC reconfiguration complete message to the MN 104A. The UE 102 can send 322 the RRC reconfiguration complete message before, during or after the random access procedure.

In some implementations, the UE 102 may indicate, in the RRC reconfiguration complete message, that the UE 102 has executed one of the C-SN configuration(s) by including a configuration ID corresponding to the particular C-SN configuration. The MN 104A can use the configuration ID to identify or determine the ID of the C-PSCell (e.g., the PCI and/or the CGI of the C-PSCell 126A) and/or the C-SN if the MN 104A performs multiple CPA procedures with different C-SNs. The MN 104A can also use the configuration ID to identify or determine the C-SN configuration or the CG-Config IE including the C-SN configuration.

In response to or after receiving 322 the RRC reconfiguration complete message, the MN 104A can send 324 an SN message to the C-SN 106A. In some implementations, the SN message can be an *SgNB Reconfiguration Complete* or *S-Node Reconfiguration Complete* message. In other implementations, the SN message can be an *RRC Transfer* message. In yet other implementations, the SN message can be a new interface message (e.g., XnAP or X2AP message) defined in 3GPP 38.423 or 36.423 release 17 or future specifications. In some implementations, the UE 102 can include an SN RRC message (e.g., *RRCReconfigurationComplete* message) in the RRC reconfiguration complete message that the UE 102 transmits at event 322. In such cases, the MN 104A can include the SN RRC message in the SN message.

In some implementations, the random access procedure can be a four-step random access procedure or a two-step random access procedure. In other implementations, the random access procedure can be a contention-based random access procedure or a contention-free random access procedure. For example, the UE 102 may include an RRC reconfiguration complete message in a message 3 of the four-step random access procedure or in a message A of the two-step random access procedure.

After the C-SN 106A successfully completes the random access procedure with the UE 102, the C-SN 106A may transmit 326 an interface message (e.g., *SN Modification Required* message, an *NG-RAN node Configuration Update* message, a *E-UTRA - NR Cell Resource Coordination Request* message, or a success indication message), which may include PSCell information of the PSCell (e.g., cell 126A) and/or the corresponding CG-Config IE and/or coordination information (e.g., *SgNB Resource Coordination Information* IE or *MR-DC Resource Coordination Information* IE) for Physical Resource Block (PRB) coordination to the MN 104A. The PSCell information can include a cell global identity (CGI), a physical cell identity (PCI), and/or an absolute radio frequency channel number (ARFCN) identifying a DL carrier frequency of the PSCell. In some implementations, the C-SN 106A can send 326 the interface message in response to or after receiving the SN message or performing 320 the random access procedure. In some implementations, the interface message further includes SN restriction information. The MN 104A may use the SN restriction information to determine the MN restriction information.

In response to or after receiving 322 the RRC reconfiguration complete message or 326 the interface message, the MN 104A applies 328 the coordination information and/or the MN restriction information. In response to applying 328 the coordination information and/or the MN restriction information, the MN 104A may transmit 330 an RRC reconfiguration message including configuration parameters to the UE 102. In some implementations, the configuration parameters 330 may reconfigure or release (values) of configuration parameters that the UE 102 uses to communicate with the MN 104A. In other implementations, the configuration parameters 330 may be new configuration parameters to configure the UE 102 to communicate with the MN 104A. In response to the RRC reconfiguration message 330, the UE 102 can transmit 332 an RRC reconfiguration message to the MN 104A. The MN 104A may in response transmit 334 an SN Modification Confirm message (e.g., *SgNB Modification Confirm* or *S-Node Modification Confirm* message). The events 320, 322, 324, 326, 328, 330, 332 and 334 are collectively referred to in Fig. 3A as a Conditional SN Addition execution procedure 394.

In response to or after receiving 322 the RRC reconfiguration complete message or 326 the interface message, the MN 104A can send 336 an SN Status Transfer message to transfer uplink PDCP SN and HFN receiver status and/or downlink PDCP SN and HFN transmitter status for each of DRB(s) of the UE 102. In contrast to event 316, the MN 104A sends 336 a (non-early) SN Status Transfer message.

After the UE 102 successfully completes the 320 the random access procedure, the UE 102 communicates 338 with the MN 104A and with the C-SN 106A via the C-PSCell in accordance with the C-SN configuration configuring the C-PSCell.

With continued reference to Fig. 3A, the C-SN configuration in some implementations can be a complete and self-contained configuration (i.e., a full configuration). The C-SN configuration may include a full configuration indication (an information element (IE) or a field) that identifies the C-SN configuration as a full configuration. The UE 102 in this case can use the C-SN configuration to communicate with the SN 106A without relying on an SN configuration. On the other hand, the C-SN configuration in other cases can include a "delta" configuration, or one or more configurations that augment a previously received SN configuration. In these cases, the UE 102 can use the delta C-SN configuration together with the SN configuration to communicate with the C-SN 106A.

The C-SN configuration can include multiple configuration parameters for the UE 102 to apply when communicating with the SN 106A via a C-PSCell 126A. The multiple configuration parameters may configure the C-PSCell 126A and zero, one, or more candidate secondary cells (C-SCells) of the SN 106A to the UE 102. The multiple configuration parameters may configure radio resources for the UE 102 to communicate with the C-SN 106A via the C-PSCell 126A and zero, one, or more C-SCells of the C-SN 106A. The multiple configuration parameters may configure zero, one, or more radio bearers. The one or more radio bearers can include an SRB and/or one or more DRBs.

In some implementations, the C-SN configuration can include a group configuration *(CellGroupConfig)* IE that configures the C-PSCell 126A and zero, one, or more C-SCells of the C-SN 106A. In one implementation, the C-SN configuration includes a radio bearer configuration. In another implementation, the C-SN configuration does not include a radio bearer configuration. For example, the radio bearer configuration can be a *RadioBearerConfig* IE, *DRB-ToAddModList* IE or *SRB-ToAddModList* IE, *DRB-ToAddMod* IE or *SRB-ToAddMod* IE. In various implementations, the C-SN configuration can be an *RRCReconfiguration* message, *RRCReconfiguration-IEs,* or the *CellGroupConfig* IE conforming to 3GPP TS 38.331. The full configuration indication may be a field or an IE conforming to 3GPP TS 38.331. In other implementations, the C-SN configuration can include an *SCG-ConfigPartSCG-r12* IE that configures the C-PSCell 126A and zero, one, or more C-SCells of the C-SN 106A. In some implementations, the C-SN configuration is an *RRCConnectionReconfiguration* message, *RRCConnectionReconfiguration-IEs,* or the *ConfigPartSCG-r12* IE conforming to 3GPP TS 36.331. The full configuration indication may be a field or an IE conforming to 3GPP TS 36.331.

Still referring to Fig. 3A, the base station 106A (i.e., the C-SN) in some cases can include the CU 172 and one or more DUs 174 as illustrated in Fig. 1C. For each of the C-SN configuration(s), the one or more DUs 174 can generate the C-SN configuration. Alternatively, for each of the C-SN configuration(s), the one or more DUs 174 can generate a portion of the C-SN configuration and the CU 172 may generate the remainder of the C-SN configuration. For example, the UE 102 performs 320 the random access procedure with the first DU 174A operating the (C-)PSCell 126A and the first DU 174A may identify the UE 102 in the random access procedure. In this case, the UE 102 communicates 338 with the SN 106A via the first DU 174A.

The first DU 174A of the C-SN 106A operating the C-PSCell 126A may generate the C-SN configuration configuring the C-PSCell 126A or a portion of the C-SN configuration and send the C-SN configuration or the portion of the C-SN configuration to the CU 172. In cases of a DU generating a portion of the C-SN configuration, the CU 172 generates the remainder of the C-SN configuration. In some scenarios or implementations, the first DU 174A generates each of the other C-SN configuration(s). Alternatively, for each of the other C-SN configuration(s), the first DU 174A generates a portion of the C-SN configuration and the CU 172 generates the remainder of the C-SN configuration. In other scenarios or implementations, the first DU 174A generates at least one first C-SN configuration in the C-SN configuration(s). Alternatively, for each of the at least one first C-SN configurations, the first DU 174A generates a portion of the C-SN configuration and the CU 172 generates the remainder of the C-SN configuration. A second DU 174B of the C-SN 106A generates at least one second C-SN configuration in the C-SN configuration(s). Alternatively, for each of the at least one second C-SN configurations, the second DU 174B generates a portion of the C-SN configuration and the CU 172 generates the remainder of the C-SN configuration.

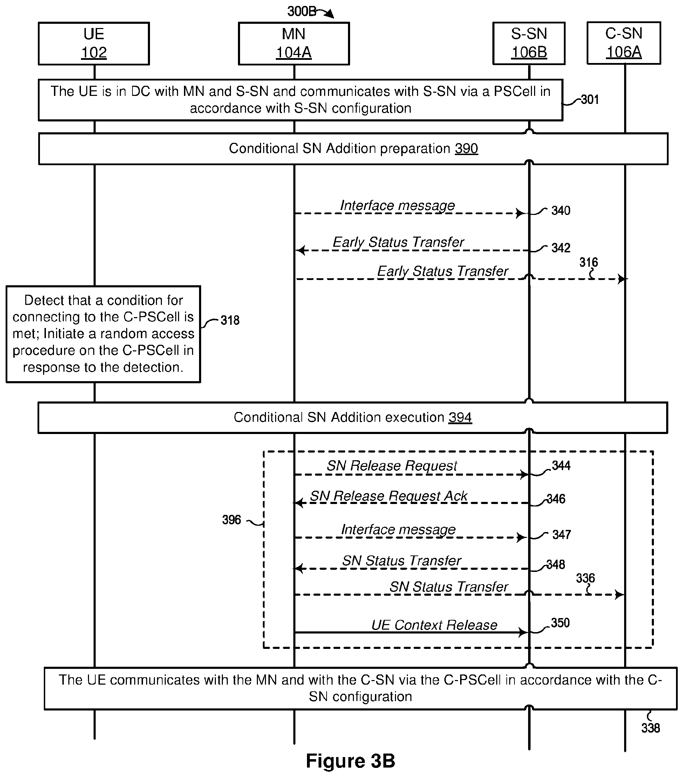

Referring next to Fig. 3B, the scenario 300B depicts an MN-initiated conditional SN Change scenario where the MN 104A initially connects with a source SN (S-SN) 106B and later performs a conditional change procedure with the C-SN 106A. The interactions between MN 104A and C-SN 106A are similar to those described in Fig. 3A. The differences between Fig. 3B and Fig. 3A are described below.

The UE 102 is initially in dual connectivity 301 with MN 104A and S-SN 106B and communicates with S-SN 106B via a PSCell in accordance with an S-SN configuration. Later in time, the MN 104A, C-SN 106A, and UE 102 performs the Conditional SN Addition preparation_procedure 390. In cases where early data forwarding is needed, the MN 104A may transmit 340 an Interface message (e.g., *Xn-U Address Indication* or *Data Address Indication* message) to the S-SN 106B. The S-SN 106B then transmits 342 an Early Status Transfer message to the MN 104A and the MN 104A then transmits 316 an Early Status Transfer message to the C-SN 106A.

Similar to Fig. 3A, the UE 102 later detects 318 that a condition for connecting to the C-PSCell is met and performs a random access procedure on the C-PSCell in response to the detection with the C-SN 106A. The UE 102, MN 104A, and C-SN 106A perform the Conditional SN Addition execution 394. The MN 104A transmits 344 an SN Release Request message (e.g., *SgNB Release Request* or *S-Node Release Request* message) to the S-SN 106B. The S-SN 106B in response transmits 346 an SN Release Request Acknowledge message (e.g., *SgNB Release Request Acknowledge* or *S-Node Release Request Acknowledge* message). In cases where data forwarding is needed, the MN 104A may transmit 347 an Interface message (e.g., *Xn-U Address Indication* or *Data Address Indication* message) to the S-SN 106B. The S-SN 106B then may transmit 348 an SN Status Transfer message to the MN 104A and the MN 104A then may transmit 336 an SN Status Transfer message to the C-SN 106A. The MN 104A transmits 350 a UE Context Release message to the S-SN 106B. The events 344, 346, 347, 348, 336, 350 can be collectively referred as an SN Release and SN Status Transfer procedure 396.

After the UE 102 successfully completes the 320 the random access procedure, the UE 102 communicates 338 with the MN and with the SN via the C-PSCell 126A in accordance with the C-SN configuration configuring the C-PSCell 126A.

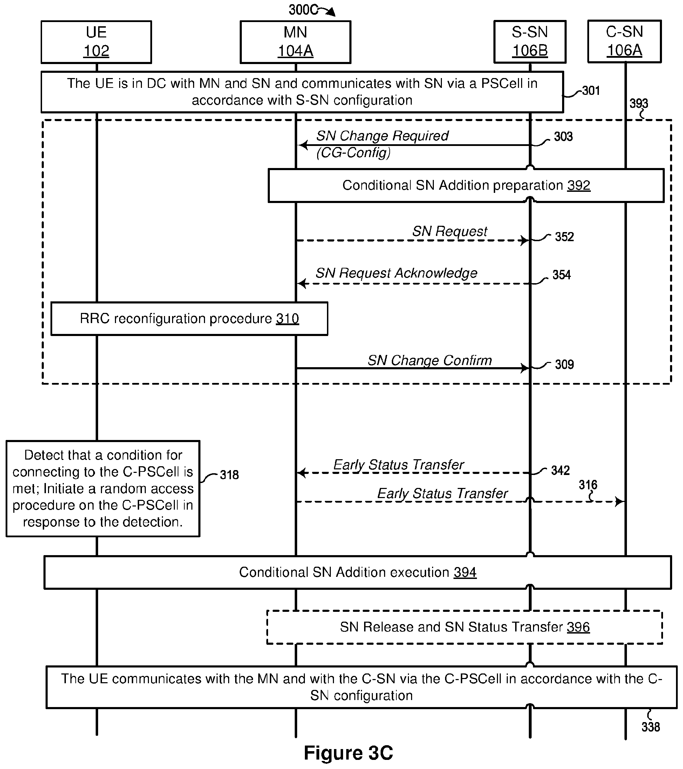

Referring next to Fig. 3C, the scenario 300C depicts an SN-initiated conditional SN Change scenario where the MN 104A initially connects with an S-SN 106B and later is triggered by S-SN 106B to perform a conditional change procedure with the C-SN 106A. The interactions between MN 104A and C-SN 106A are similar to those described in Figs. 3A or 3B. The differences between Fig. 3C and Figs. 3A and 3B are described below.

The S-SN 106B at some time point decides to initiate a conditional SN change procedure and transmits 303 an SN Change Required message (e.g., *SgNB Change Required* or *S-Node Change Required* message defined in the 3GPP TS 36.423 and 38.423, respectively) including the candidate Target SN ID (e.g., Global en-gNB ID, or Global NG-RAN Node ID), and the CG-Config, which further includes the proposed candidate cell information (e.g., physical cell ID and/or related cell measurement results) and the trigger condition(s) (e.g., condExecutionCond-SCG IE, which may include measurement ID(s) referring to a configured S-SN measurement) for the corresponding candidate cell(s) to the MN 104A. The MN 104A and the C-SN 106A perform the Conditional SN Addition preparation procedure 392 with the proposed candidate cell information from the S-SN 106B. The MN 104A may transmit 352 an SN Request message (e.g., *SgNB Modification Request* or *S-Node Modification Request* message) to provide the candidate PSCell(s) accepted by the C-SN 106A to the S-SN 106B. The S-SN 106B in response may transmit 354 an SN Request Acknowledge message (e.g., *SgNB Modification Request Acknowledge* or *S-Node Modification Request Acknowledge* message) to provide the updated measurement configuration and/or trigger condition(s). The MN 104A performs 310 an RRC reconfiguration procedure with the UE 102 to configure the conditional configuration(s). The MN 104A transmits 309 an SN Change Confirm message (e.g., *SgNB Change Confirm* or S-*Node Change Confirm* message) to the S-SN 106B. The events 303, 392, 352, 354, 310, and 309 can be collectively referred as the SN-initiated Conditional SN Change preparation procedure 393.

If the UE 102 later detects 318 that a condition for connecting to a C-PSCell is met, similarly the UE 102 performs the random access procedure with the C-SN 106A via the C-PSCell and the conditional SN addition execution procedure 394. The MN 104A, S-SN 106B, and C-SN 106A can perform 396 the SN Release and SN Status Transfer procedure. However, different from scenario 300B, in the scenario 300C the MN 104A might not transmit 344 the SN Release Request message and the S-SN 106B might therefore not transmit 346 the SN Release Request Acknowledge message.

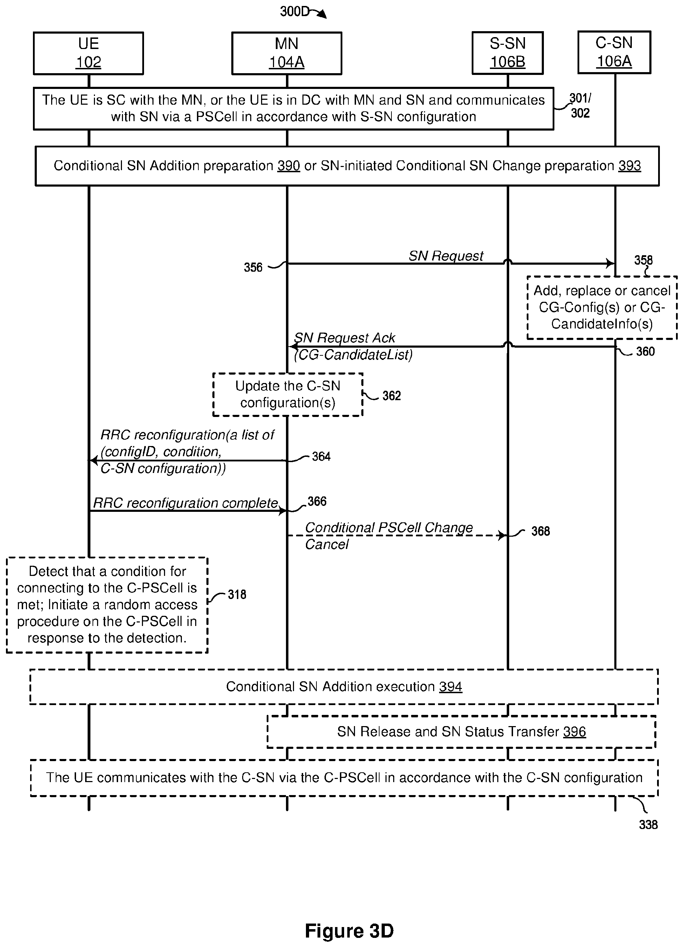

Turning to Figs. 3D-3F, scenarios 300D-300F may each be similar to any one of the scenarios 300A-300C. However, the scenarios 300D-300F involve a modification (e.g., addition, replacement, or cancellation) to the prepared conditional SN addition or change configuration(s).

Referring first to Fig. 3D, in the scenario 300D the UE 102 initially either operates 302 in single connectivity (SC) with the MN 104A or operates 301 in DC with the MN 104A and S-SN 106B and communicates with the S-SN 106B via a PSCell in accordance with an S-SN configuration. The UE 102 later performs the Conditional SN Addition preparation procedure 390 for CPA per Fig. 3A or perhaps as part of an MN-initiated Conditional SN Change preparation procedure per Fig. 3B or the SN-initiated Conditional SN Change preparation procedure 393 with the MN 104A, (S-SN 106B) and the C-SN 106A for CPC per Fig. 3C.

At a later time, the MN 104A determines to change SN restriction (e.g., change the maximum number of PSCell to prepare) or update one or more measurement results (e.g., update the candidate cell information to include additional, different, or fewer candidate cell measurement result(s) when compared with the previous preparation in event 390 or 393). For example, a first candidate cell not under consideration during the procedure 390 or 393 may have a signal strength above a certain signal strength threshold, while a second candidate cell configured during the event 390 or 393 may have a signal strength below another certain signal strength threshold. The MN 104A transmits 356 an SN Request message (e.g., *SgNB Modification Request* or *S-Node Modification Request* message) including the updated SN restriction and/or measurement results. The C-SN 106A, based on the updated information, performs 358 addition, replacement (i.e., modification), or cancellation (i.e., releasing) of CG-Config IE(s) or CG-CandidateInfo IE(s) associated with C-PSCell(s) for the UE 102. More specifically, the C-SN 106A can generate an addition list, a modification list, or a release list to add, modify, or release one or more CG-Config IE(s) or CG-CandidateInfo IE(s) associated with C-PSCell(s) for the UE 102, respectively. In response to receiving 356 the SN Request message, the C-SN 106A can send 360 an SN Request Acknowledge message (e.g., *SgNB Modification Request Acknowledge* or *S-Node Modification Request Acknowledge* message) including the addition list, modification list, and/or the release list to the MN 104A. In some implementations, the C-SN 106A can generate a CG-CandidateList including the addition list, modification list, and/or the release list and include the CG-CandidateList in the SN Request Acknowledge message. In other implementations, the C-SN 106A, for example. includes the release list as a separate IE from the CG-CandidateList in the SN Request Acknowledge message.

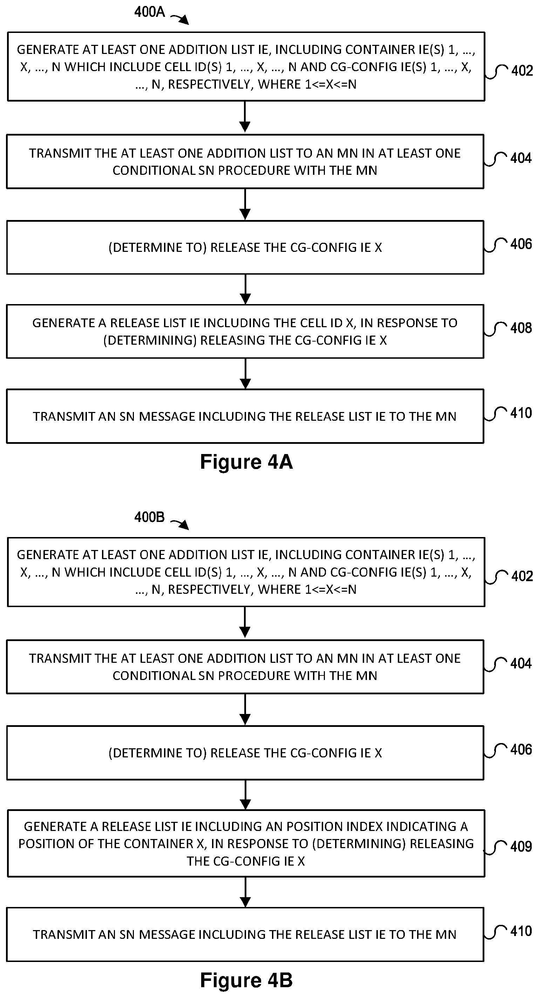

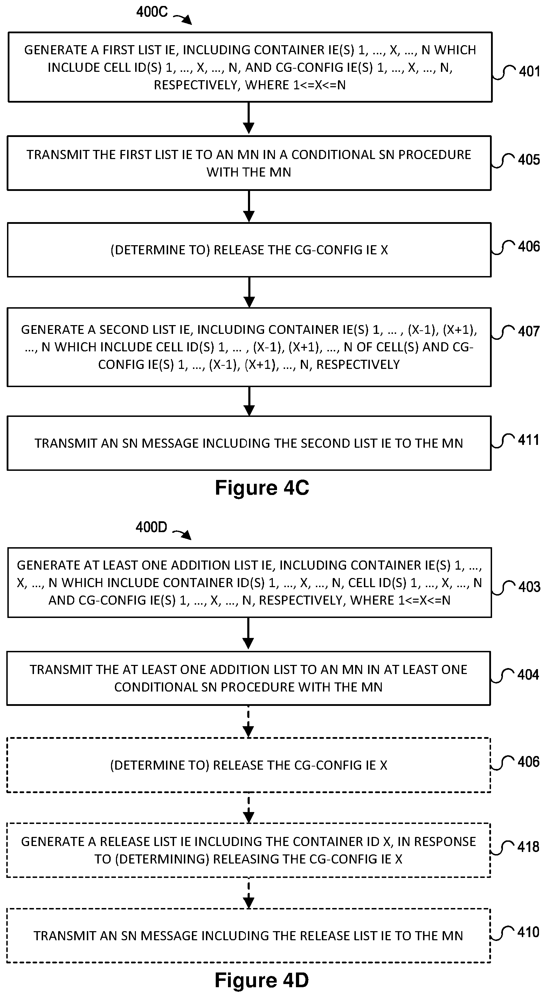

The following paragraphs illustrate example implementations of the addition list, modification list, and release list, respectively, and how an MN 104A updates the CG-Config IE(s). Further, Figs. 4-8 also illustrate methods by which the C-SN can indicate updates to the CG-Config IE(s) to the MN.

To add one or more CG-Config IE(s) or CG-CandidateInfo IE(s) associated with C-PSCell(s) for the UE 102, the C-SN 106A in one implementation generates the addition list (e.g., a CG-CandidateList in the implementation 1, 2 or 3) including all the previous CG-CandidateInfo IE(s) sent to the MN 104A in event 390 or 393 and additionally the one(s) to be added, where each contains new C-PSCell information for a new C-PSCell (e.g., SSB frequency information (e.g., ARFCN-ValueNR) and the physical Cell ID (PCI) or Cell Global ID (CGI)) and a new CG-Config IE. After receiving 360 the addition list, the MN 104A replaces the previous CG-CandidateList of event 390 or 393 with the addition list. In an alternative implementation, the C-SN 106A includes, in the addition list (e.g., cg-CandidateToAddModList-r17 in the implementation 4), new CG-CandidateInfo IE(s) where each contains new C-PSCell information for a new C-PSCell and/or a new CG-Config IE and a new CG-CandidateInfo ID. In such cases, the C-SN 106A may or may not include, in the addition list, all the previous CG-CandidateInfo IE(s) sent to the MN 104A in event 390 or 393. Because of the new CG-CandidateInfo ID(s), the MN 104A retains the previous CG-CandidateInfo IE(s) of event 390 or 393 and stores (i.e., adds) the new CG-CandidateInfo IE(s).

To modify one or more of the previous CG-CandidateInfo IE(s) in the CG-CandidateList of event 390 or 393, each including C-PSCell information (e.g., SSB frequency information (e.g., ARFCN-ValueNR) and the physical Cell ID (PCI) or Cell Global ID (CGI)) for a configured C-PSCell, the C-SN 106A in one implementation generates the modification list (e.g., a CG-CandidateList in the implementation 1, 2 or 3) including new CG-CandidateInfo IE(s), where each contains the C-PSCell information for the configured C-PSCell and a new CG-Config IE. The C-SN 106A can also include, in the modification list, other previous CG-CandidateInfo IE(s) in the CG-CandidateList of event 390 or 393 that the C-SN 106A determines not to modify. After receiving 360 the modification list, the MN 104A replaces all the previous CG-Config IE(s) or CG-CandidateInfo IE(s) in the CG-CandidateList of event 390 or 393 with the CG-Config IE(s) or CG-CandidateInfo IE(s) in the modification list. Alternatively, after receiving 360 the modification list, the MN 104A replaces the CG-CandidateList of event 390 or 393 with the modification list. In an alternative implementation, the C-SN 106A includes, in the modification list (e.g., cg-CandidateToAddModList-r17 in the implementation 4), new CG-CandidateInfo IE(s), where each contains C-PSCell information and/or a CG-Config IE, and an existing CG-CandidateInfo ID in the CG-CandidateInfo IE(s) of event 390 or 393. In accordance with the CG-CandidateInfo ID(s), the MN 104A identifies and modifies (or replaces) the CG-Config IE(s) and/or CG-CandidateInfo IE(s) of event 390 or 393. In such cases, the C-SN 106A may or may not include, in the modification list, the unmodified CG-CandidateInfo IE(s) that the C-SN 106A sent to the MN 104A in event 390 or 393.

In some implementations, the C-SN 106A can combine the addition list and modification list in a single list (e.g., CG-CandidateToAddModList). In such cases, the MN 104A, in accordance with the cell ID(s) and/or SSB frequency information and/or CG-CandidateInfo ID, identifies and adds (or modifies) the (existing) CG-Config IE(s) and/or CG-CandidateInfo IE(s) associated with the cell ID(s) and/or SSB frequency information, and/or CG-CandidateInfo ID. For example, if the cell ID(s) and/or SSB frequency information and/or CG-CandidateInfo ID does not exist after event 390 or 393, the MN 104A adds the CG-Config IE and/or CG-CandidateInfo IE; otherwise, the MN 104A modifies (or replaces) the existing CG-Config IE and/or CG-CandidateInfo IE.

To release one or more CG-Config IE(s) or CG-CandidateInfo IE(s) associated with C-PSCell(s) for the UE 102, the C-SN 106A in one implementation generates the release list (e.g., a CG-CandidateList in the implementation 1) including all the previous CG-Config IE(s) or CG-CandidateInfo IE(s) sent to the MN 104A except the one(s) to be released. After receiving 360 the updated CG-CandidateList, the MN 104A replaces the previous CG-CandidateList of event 390 or 393 with the release list. In an alternative implementation, the C-SN 106A includes, in the release list (e.g., cg-CandidateToReleaseList-r17 in the implementation 2), cell ID(s) (e.g., PCI(s) or CGI(s)) of the C-PSCell(s) to indicate the CG-Config IE(s) or CG-CandidateInfo IE(s) to be released. The C-SN 106A may or may not include SSB frequency information associated with the C-PSCell(s) in the release list. In accordance with the cell ID(s) and/or SSB frequency information, the MN 104A identifies and releases the CG-Config IE(s) and/or CG-CandidateInfo IE(s) associated with the cell ID(s) and/or SSB frequency information. In yet another implementation, the C-SN 106A includes, in the release list (e.g., cg-CandidateToReleaseList-r17 in the implementation 3), one or more position indices of the CG-Config IE(s) or CG-CandidateInfo IE(s), that refers to the position(s) of the CG-Config IE(s) or CG-CandidateInfo IE(s) in the addition list of the event 306. In accordance with the position index/indices, the MN 104A identifies and releases the CG-Config IE(s) and/or CG-CandidateInfo IE(s) associated with the position index/indices. In yet another implementation, the C-SN 106A includes, in the release list (e.g., cg-CandidateToReleaseList-r17 in the implementation 4), one or more CG-CandidateInfo ID(s) (e.g., cg-CandidateInfoId or CG-CandidateInfoId) of the CG-Config IE(s) or CG-CandidateInfo IE(s). In accordance with the CG-CandidateInfo ID(s), the MN 104A identifies and releases the CG-Config IE(s) and/or CG-CandidateInfo IE(s) associated with the CG-CandidateInfo ID(s).

In some implementations, if the C-SN cancels or releases all previously prepared C-SN configuration(s), the 356 SN Request message can, instead of the SN Modification Request message, be a *SgNB Release Request* message or *S-Node Release Request* message excluding the updated information and the 360 SN Request Acknowledge message can be a *SgNB Release Request Acknowledge* message or *S-Node Release Request Acknowledge* message excluding the updated CG-CandidateList or the release list.

The MN 104A, after receiving 360 the SN Request Acknowledge message, may perform 362 updates to the (stored) C-SN configuration(s) according to the received information (e.g., the updated CG-CandidateList including the addition, modification, or release list or the separate release/modification list IEs) as described in the example implementations above for the addition, modification, or release list. In some implementations, to update the conditional configuration(s) at the UE 102, the MN 104A (does not identify and associate the CG-Config(s) and) treats the received information (e.g., the updated CG-CandidateList) as a fresh preparation of the conditional configuration(s) and proceeds as specified after event 308 in Fig. 3A for the following RRC reconfiguration procedure. In some implementations, the MN 104A, in accordance with the addition, modification, or release list, may associate the updated C-SN configuration(s) with the existing conditional configuration ID(s) (e.g., *condReconfigId* or *CondReconfigurationId)* or assign new conditional configuration ID(s) in case of adding new C-SN configuration(s). The updated C-SN configuration(s) are included in an RRC reconfiguration message. In some implementations, for CPAC replace or addition, the updated C-SN configuration(s) are included in a CondReconfigToAddModList, where each entry includes a configuration ID (e.g., *condReconfigId* or *CondReconfigurationId),* a triggering condition configuration (e.g., *condExecutionCond),* and a C-SN configuration (e.g., *condRRCReconfig*). For CPAC cancel, the updated C-SN configuration(s) are included in a CondReconfigToRemoveList, where each entry includes a configuration ID (e.g., *condReconfigId* or *CondReconfigurationId).* The MN 104A transmits 364 the RRC reconfiguration message including the updated C-SN configuration(s) to the UE 102. The UE 102 applies the reconfiguration(s) and transmits 366 an RRC reconfiguration complete message to the MN 104A.

In case of the SN-initiated conditional SN Change case (i.e., procedure 393 is performed), the MN 104A may transmit 368 a Conditional PSCell Change Cancel message to the S-SN 106B to inform the S-SN 106B that a list of prepared PSCells are cancelled in the C-SN 106A.

Similar to Figs. 3A or 3B, if there are still conditional configuration(s) configured at the UE 102 after event 364, the UE 102 may later detect that a condition is met for connecting to a C-PSCell and perform a random access procedure with the C-SN 106A via the C-PSCell. The conditional SN addition execution procedure 394 and/or the SN Release and SN Status Transfer procedure 396 are also performed.

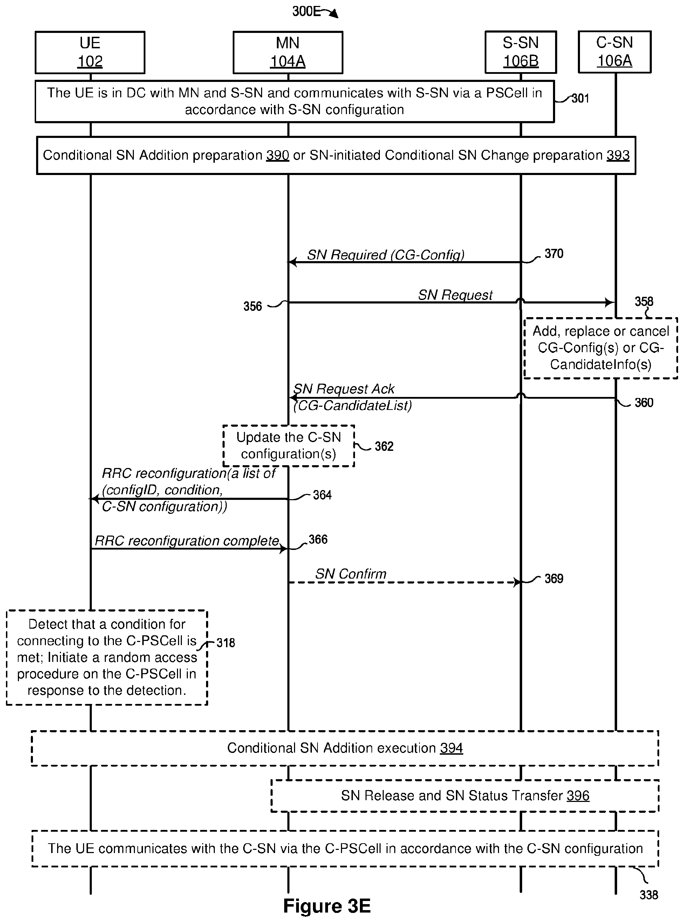

Referring next to Fig. 3E, a scenario 300E is similar to 300D; however, in the scenario 300E after the Conditional SN Addition preparation procedure 390 for MN-initiated CPC or SN-initiated Conditional SN Change preparation procedure 393, the S-SN 106B decides to initiate modification to the (prepared conditional) configuration(s). The further differences between Fig. 3D and Fig. 3E are described below.

In some implementations, the SN-initiated Conditional SN Change preparation procedure 393 is performed, and later in time the S-SN 106B, for example, updates one or more measurement results (e.g. update the candidate cell information to include additional, different, or fewer candidate cell(s) from the previous preparation in event 390 or 393) or changes SN restriction (e.g., Maximum Number of PSCells To Prepare) at the C-SN 106A. In other implementations, the MN-initiated Conditional SN Change preparation 390 is performed, and later in time the S-SN 106B, for example, decides to modify one or more configurations at the S-SN 106B. The S-SN 106B therefore transmits 370 an SN Required message (e.g., *SgNB Modification*/*Change Required* or *S-Node Modification*/*Change Required* message) to the MN 104A, where the SN Required message may include the updated measurement results and/or the updated SN restriction and/or the updated trigger condition(s) for the corresponding candidate cell(s) and the target SN ID and/or the updated S-SN configuration. (In cases where the S-SN configuration is to be updated, the MN 104A may perform an RRC reconfiguration procedure with the UE 102, not shown in Fig. 3E). The MN 104A transmits 356 an SN Request message (e.g., *SgNB Modification Request* or *S-Node Modification Request* message) including the updated measurement results and/or the updated SN restriction and/or the updated S-SN configuration to the C-SN 106A. The C-SN 106A, based on the updated information, performs 358 addition, replacement (i.e., modification), or cancellation (i.e., releasing) of CG-Config IE(s) or CG-CandidateInfo IE(s) associated with C-PSCell(s) for the UE 102. The C-SN 106A transmits 360 an SN Request Acknowledge message (e.g., *SgNB Modification Request Acknowledge* or *S-Node Modification Request Acknowledge* message) including an updated CG-CandidateList to the MN 104A, as described in Fig. 3D. After updating 362 the C-SN Configuration(s) as described in Fig. 3D and performing the RRC reconfiguration procedure 364 and 366 to update the C-SN configuration(s) at the UE 102, the MN 104A may transmit 374 an SN Confirm message (e.g., *SgNB Modification*/*Change Confirm* or *S-Node Modification*/*Change Confirm* message) to the S-SN 106B.

If the UE 102 later successfully detects that a condition for connecting to a C-PSCell is met and performs the Conditional SN Addition execution procedure 394, the MN 104A performs the SN Release and SN Status Transfer procedure 396 with the S-SN 106B and C-SN 106A. In cases where the SN-initiated Conditional SN Change preparation procedure 393 was performed, the MN 104A might not transmit 344 the SN Release Request message, and the S-SN 106B therefore might not transmit 346 the SN Release Request Acknowledge message in the SN Release and SN Status Transfer procedure 396.

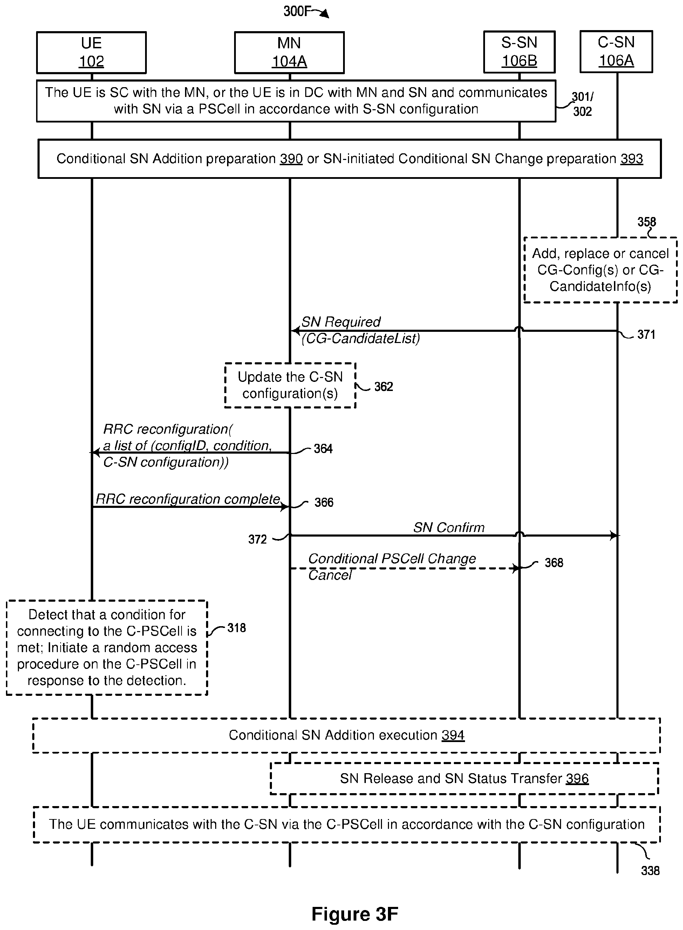

Referring next to Fig. 3F, a scenario 300F is similar to scenario 300D or 300E; however, in the scenario 300F the C-SN 106A, after performing the Conditional SN Addition Preparation procedure 390 or the SN-initiated Conditional SN Change preparation procedure 393, may decide to modify one or more of the conditional configuration(s). In one example, the C-SN 106A determines to cancel one or more of the conditional configuration(s) in response to detecting congestion or a resource shortage. In another example, the C-SN 106A determines to modify one or more of the conditional configuration(s) in response to detecting a resource shortage. In yet another example, the C-SN 106A determines to configure new, additional conditional configuration(s) in response to detecting that more resources are available. The C-SN 106A performs 358 addition, replacement (i.e., modification), or cancellation (i.e., releasing) of CG-Config IE(s) or CG-CandidateInfo IE(s) associated with C-PSCell(s) for the UE 102. The C-SN 106A transmits 371 an SN Required message (e.g., *SgNB Modification*/*Release Required* or *S-Node Modification*/*Release Required* message), which may include the updated CG-CandidateList similar to the event 360. The MN 104A, similar to Figs. 3D or 3E, updates 362 the C-SN configuration(s) and performs 364 and 366 an RRC reconfiguration procedure with the UE 102 to reconfigure the C-SN configuration(s). The MN 104A transmits 372 an SN Confirm message (e.g., *SgNB Modification*/*Release Confirm* or *S-Node Modification*/*Release Confirm* message) to the C-SN 106A. In cases of SN-initiated conditional SN Change, the MN 104A may transmit 368 a Conditional PSCell Change Cancel message to the S-SN 106B to inform the S-SN 106B that a list of prepared PSCells are cancelled in the C-SN 106A. If the UE 102 detects that a condition for connecting to a C-PSCell is met, the UE 102 performs 394 the Conditional SN Addition execution procedure. The MN 104A, S-SN 106B, and C-SN 106A may then perform the SN Release and SN Status Transfer procedure 396. In cases where the SN-initiated Conditional SN Change preparation procedure 393 was performed, the MN 104A may not transmit 344 the SN Release Request message, and the S-SN 106B may therefore not transmit 346 the SN Release Request Acknowledge message during the SN Release and SN Status Transfer procedure 396.

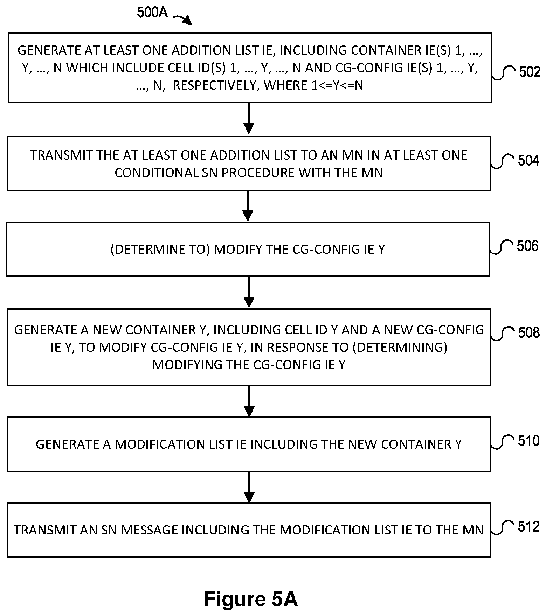

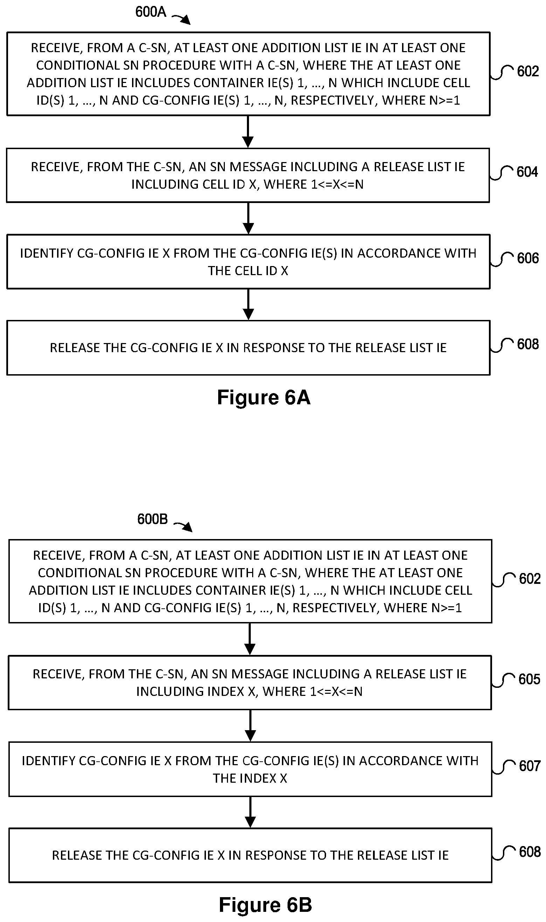

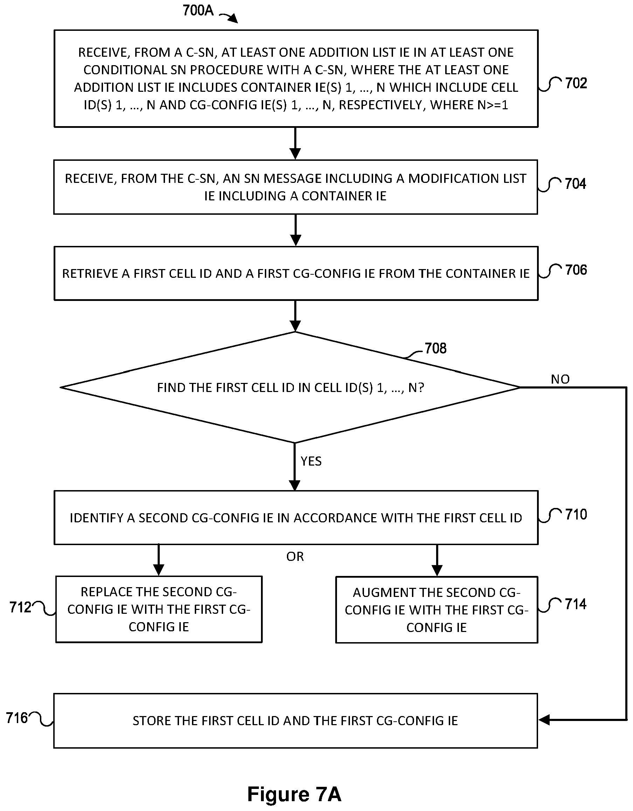

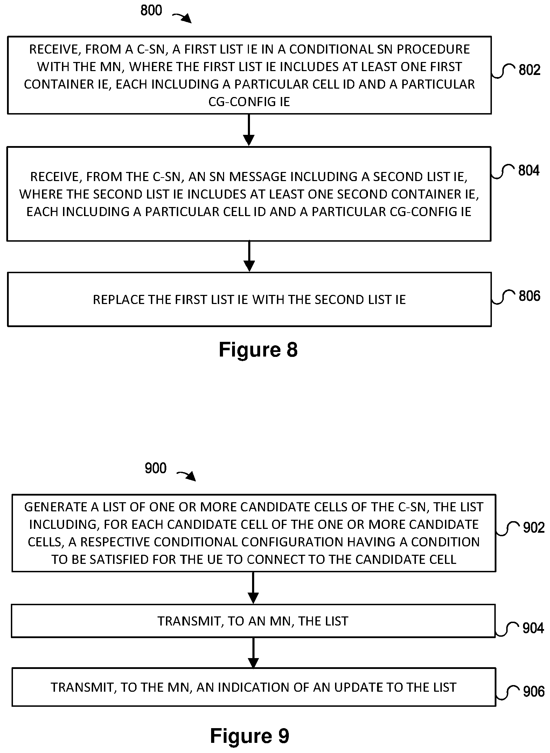

Figs. 4-10 are flow diagrams depicting example methods that a base station (e.g., the base station 104A, 104B, 106A, or 106B) can implement to support conditional procedures in accordance with the techniques of this disclosure. As indicated at various points throughout this disclosure, the example methods depicted in Figs. 4-10 may be implemented during the scenarios 300A-300F described above. Figs. 4A-4D and Figs. 5A-5C illustrate methods that can be implemented by a C-SN to release or modify a conditional configuration for a UE, respectively. Figs. 6A-6C illustrate methods that can be implemented by an MN to release a conditional configuration, and Figs. 7A-7B illustrate methods than can be implemented by an MN to modify or add a conditional configuration for a UE. Further, Fig. 8 illustrates a method that can be implemented by an MN to replace a first list of candidate cells with a second list of candidate cells, thereby adding, removing, or modifying conditional configurations for a UE.

Referring to Fig. 4A, a method 400A where a C-SN or the CU of the C-SN (e.g., the C-SN 106A or the CU 172 of the C-SN 106A) performs a conditional SN procedure with an MN (e.g., the MN 104A) for a UE (e.g., the UE 102) and later notifies the MN to release a specific conditional configuration using a cell ID of the candidate cell corresponding to the specific conditional configuration is described.

During the method 400A, the C-SN at block 402 generates at least one addition list IE, including container IE(s) 1, *..., X, ..., N,* which include cell ID(s) 1, ..., *X,* ..., *N* and CG-Config IE(s) 1, ..., *X,* ..., *N,* respectively, where 1 ≤ *X* ≤ *N* (e.g., event 306). At block 404, the C-SN transmits the at least one addition list to an MN in at least one conditional SN procedure with the MN (e.g., event 308). The C-SN at block 406 (determines to) release the CG-Config IE X (e.g., in response to a request from the MN, such as at event 356, or independently from an explicit request from the MN, such as prior to event 358 in Fig. 3F). At block 408, the C-SN generates a release list IE including the cell ID X, in response to (determining) releasing the CG-Config IE X (e.g., event 358). The C-SN at block 410 transmits an SN message including the release list IE to the MN (e.g., event 360).

Referring next to Fig. 4B, a method 400B where a C-SN or the CU of the C-SN (e.g., the C-SN 106A or the CU 172 of the C-SN 106A) performs a conditional SN procedure with an MN (e.g., the MN 104A) and later notifies the MN to release a specific conditional configuration using a position index of the candidate cell corresponding to the specific conditional configuration is described.

The method 400B begins similarly to the method 400A. After block 406, at block 409, the C-SN generates a release list IE including a position index indicating a position of the container X, in response to (determining) releasing the CG-Config IE X (e.g., event 358). The C-SN at block 410 transmits an SN message including the release list IE to the MN (e.g., event 360).

Referring next to Fig. 4C, a method 400C where a C-SN or the CU of the C-SN (e.g., the C-SN 106A or the CU 172 of the C-SN 106A) performs a conditional SN procedure with an MN (e.g., the MN 104A) and later notifies the MN to release a specific conditional configuration using a replacement list excluding the specific conditional configuration is described.

During the method 400C, the C-SN at block 401 generates a first list IE, including container IE(s) 1, *..., X, ..., N,* which include cell ID(s) 1, *..., X, ..., N* and CG-Config IE(s) 1, ..., X, ...*, N,* respectively, where 1 ≤ *X* ≤ *N* (e.g., event 306). At block 405, the C-SN transmits the first list IE to an MN in a conditional SN procedure with the MN (e.g., event 308). The C-SN at block 406 (determines to) release the CG-Config IE X. At block 407, the C-SN generates a second list IE, including container IE(s) 1, ... , (*X*-1), (*X*+1), ..., *N*, which include cell ID(s) 1, ... , (*X*-1), (*X*+1), ..., *N* of cell(s) and CG-Config IE(s) 1, ...,(*X*-1), *(X+1),* ..., *N*, respectively (e.g., event 358). The C-SN at block 411 transmits an SN message including the second list IE to the MN (e.g., event 360).

Referring next to Fig. 4D, a method 400D where a C-SN or the CU of the C-SN (e.g., the C-SN 106A or the CU 172 of the C-SN 106A) performs a conditional SN procedure with an MN (e.g., the MN 104A) and later notifies the MN to release a specific conditional configuration using a release list including a container identifier corresponding to the conditional configuration is described.

During the method 400D, the C-SN at block 403 generates a least one addition list IE, including container IE(s) 1, *..., X, ..., N,* which include container ID(s) 1, *..., X, ..., N,* cell ID(s) 1, ..., *X, ..., N* and CG-Config IE(s) 1, *..., X, ..., N,* respectively, where 1 ≤ *X* ≤ *N* (e.g., event 306). Block 403 is similar to block 402, but where each container IE includes a container ID. At block 404, the C-SN transmits the at least one addition list to an MN in at least one conditional SN procedure with the MN (e.g., event 308). The C-SN at block 406 may (determine to) release the CG-Config IE X. At block 418, the C-SN may generate a release list IE including the container ID X, in response to (determining) releasing the CG-Config IE *X* (e.g., event 358). The C-SN at block 410 may transmit an SN message including the release list IE to the MN (e.g., event 360).

In some implementations, the container ID(s) 1, ..., *X,* ..., *N* can be CG-CandidateInfo ID(s) 1, *..., X, ..., N* or CG-Config ID(s) 1, ..., *X,* ..., *N.*

Turning to Fig. 5A, a method 500A where a C-SN or the CU of the C-SN (e.g., the C-SN 106A or the CU 172 of the C-SN 106A) performs a conditional SN procedure with an MN (e.g., the MN 104A) and later notifies the MN to modify (or replace) a specific conditional configuration using a modification list including a new container is described.

The method 500A starts at block 502 where the C-SN generates at least one addition list IE, including container IE(s) 1, ..., *Y, ..., N,* which include cell ID(s) 1, ..., *Y, ..., N* and CG-Config IE(s) 1, *..., Y, ..., N,* respectively, where 1≤ *Y* ≤ *N* (e.g., event 306). At block 504, the C-SN transmits the at least one addition list to an MN in at least one conditional SN procedure with the MN (e.g., event 308). At block 506, the C-SN (determines to) modify the CG-Config IE *Y* (e.g., in response to a request from the MN, such as at event 356, or independently from an explicit request from the MN, such as prior to event 358 in Fig. 3F). The C-SN at block 508 generates a new container *Y*, including Cell ID *Y* and a new CG-Config IE *Y* to modify the CG-Config IE *Y,* in response to (determining) modifying the CG-Config IE *Y.* The C-SN at block 510 generates a modification list IE including the new container *Y* (e.g., event 358). At block 512, the C-SN transmits an SN message including the modification list IE to the MN (e.g., event 360).

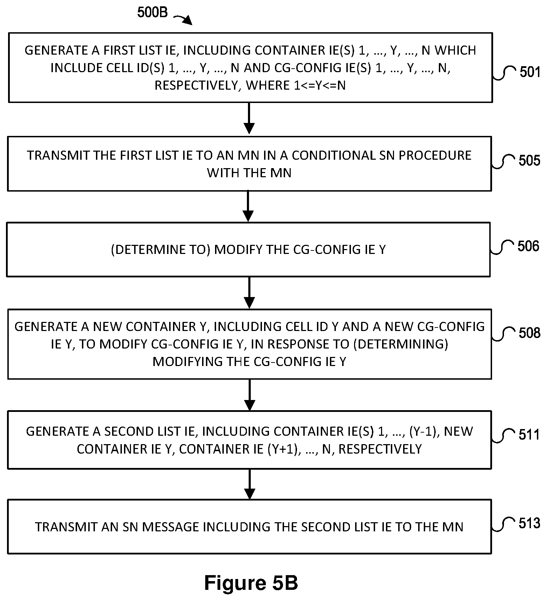

Referring next to Fig. 5B, a method 500B where a C-SN, or the CU of the C-SN (e.g., the C-SN 106A or the CU 172 of the C-SN 106A) performs a conditional SN procedure with an MN (e.g., the MN 104A) and later notifies the MN to modify (or replace) a specific conditional configuration using a replacement list including a new container is described.

The method 500B starts at block 501 where the C-SN generates a first list IE, including container IE(s) 1, *..., Y, ..., N,* which include cell ID(s) 1, ..., *Y,* ..., *N* and CG-Config IE(s) 1, *..., Y, ..., N,* respectively, where 1≤ *Y*≤ *N* (e.g., event 306). At block 505, the C-SN transmits the first list IE to an MN in a conditional SN procedure with the MN (e.g., event 308). At block 506, the C-SN (determines to) modify the CG-Config IE *Y.* The C-SN at block 508 generates a new container *Y,* including Cell ID *Y* and a new CG-Config IE *Y,* to modify the CG-Config IE *Y,* in response to (determining) modifying the CG-Config IE *Y.* The C-SN at block 511 generates a second list IE including the container IE(s) 1, ..., (*Y*-1), new container IE *Y,* container IE (*Y*+1), *..., N,* respectively (e.g., event 358). At block 513, the C-SN transmits an SN message including the second list IE to the MN (e.g., event 360).

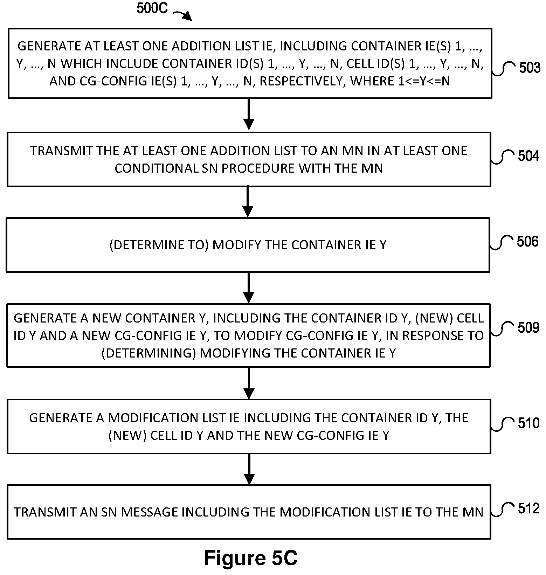

Referring next to Fig. 5C, a method 500C where a C-SN or the CU of the C-SN (e.g., the C-SN 106A or the CU 172 of the C-SN 106A) performs a conditional SN procedure with an MN (e.g., the MN 104A) and later notifies the MN to modify (or replace) a specific conditional configuration using a modification list including a new container having a container identifier is described.

The method 500C starts at block 503 where the C-SN generates at least one addition list IE, including container IE(s) 1, *..., Y, ..., N,* which include container ID(s) 1, ..., *Y, ..., N,* cell ID(s) 1, *..., Y, ..., N* and CG-Config IE(s) 1, *..., Y, ..., N,* respectively, where 1≤ *Y* ≤ *N* (e.g., event 306). Block 503 is similar to block 502, but where each container IE includes a container ID. At block 504, the C-SN transmits the at least one addition list to an MN in at least one conditional SN procedure with the MN (e.g., event 308). At block 506, the C-SN (determines to) modify the CG-Config IE *Y.* The C-SN at block 509 generates a new container *Y,* including the container ID *Y,* Cell ID *Y* and a new CG-Config IE *Y,* to modify the CG-Config IE *Y,* in response to (determining) modifying the CG-Config IE *Y* (e.g., event 358). The C-SN at block 510 generates a modification list IE including the new container *Y*. At block 512, the C-SN transmits an SN message including the modification list IE to the MN (e.g., event 360).

In some implementations, the container ID(s) 1, ..., X, ..., *N* can be CG-CandidateInfo ID(s) 1, *..., X, ..., N* or CG-Config ID(s) 1, ..., *X,* ..., *N.*

Turning to Fig. 6A, a method 600A where an MN (e.g., the MN 104A) performs an SN procedure with a C-SN (e.g., the C-SN 106A) and later releases a specific conditional configuration based on a cell ID received from the C-SN is described. The method 600A is similar to the method 400A, but from the perspective of the MN rather than the C-SN.

The method 600A starts at block 602 where the MN receives, from a C-SN, at least one addition list IE in at least one conditional SN procedure with a C-SN, where the at least one addition list IE includes container IE(s) 1, ..., *N*, which include cell ID(s) 1, ..., *N* and CG-Config IE(s) 1, ..., *N*, respectively, where *N* ≥ 1 (e.g., event 308). At block 604, the MN receives, from the C-SN, an SN message including a release list IE including cell ID X, where 1≤ *X* ≤ *N* (e.g., event 360). The MN at block 606 identifies CG-Config IE X from the CG-Config IE(s) in accordance with the cell ID X. The MN at block 608 releases the CG-Config IE X in response to the release list IE (e.g., event 362).

Referring next to Fig. 6B, a method 600B where an MN (e.g., the MN 104A) performs an SN procedure with a C-SN (e.g., the C-SN 106A) and later releases a specific conditional configuration based on an index indicating the position of a cell in a list and received from the C-SN is described. The method 600B is similar to the method 500B, but from the perspective of the MN rather than the C-SN.

The method 600B starts at block 602 where the MN receives, from a C-SN, at least one addition list IE in at least one conditional SN procedure with a C-SN, where the at least one addition list IE includes container IE(s) 1, ..., *N*, which include cell ID(s) 1, ..., *N* and CG-Config IE(s) 1, ..., *N*, respectively, where *N ≥* 1 (e.g., event 308). At block 605, the MN receives, from the C-SN, an SN message including a release list IE including index *X,* where 1≤ *X* ≤ *N* (e.g., event 360). The MN at block 607 identifies CG-Config IE X from the CG-Config IE(s) in accordance with the index X. The MN at block 608 releases the CG-Config IE X in response to the release list IE (e.g., event 362).

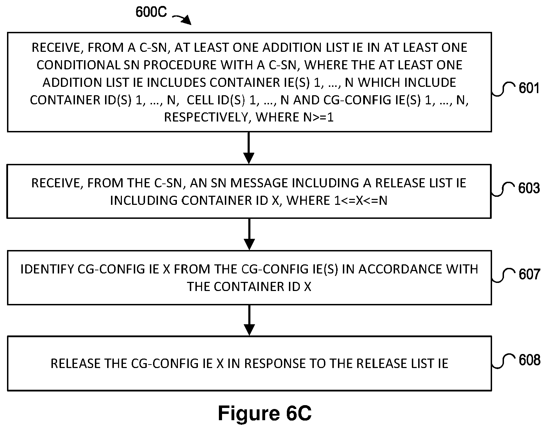

Referring next to Fig. 6C, a method 600C where an MN (e.g., the MN 104A) performs an SN procedure with a C-SN (e.g., the C-SN 106A) and later releases a specific conditional configuration based on a container ID received from the C-SN is described. The method 600C is similar to the method 500D, but from the perspective of the MN rather than the C-SN.

The method 600C starts at block 601 where the MN receives, from a C-SN, at least one addition list IE in at least one conditional SN procedure with a C-SN, where the at least one addition list IE includes container IE(s) 1, ..., *N*, which include container ID(s) 1, ..., *N,* cell ID(s) 1, ..., *N* and CG-Config IE(s) 1, ..., *N*, respectively, where *N* ≥ 1 (e.g., event 308). At block 603, the MN receives, from the C-SN, an SN message including a release list IE including container ID X, where 1≤ *X* ≤ *N* (e.g., event 360). The MN at block 607 identifies CG-Config IE X from the CG-Config IE(s) in accordance with the container ID X. The MN at block 608 releases the CG-Config IE X in response to the release list IE (e.g., event 362).

In some implementations, the container ID(s) 1, ..., *X,* ..., *N* can be CG-CandidateInfo ID(s) 1, *..., X, ..., N* or CG-Config ID(s) 1, ..., *X,* ..., *N.*

Turning to Fig. 7A, a method 700A where an MN (e.g., the MN 104A) performs an SN procedure with a C-SN (e.g., the C-SN 106A) and later modifies (e.g., replaces or adds to) the prepared conditional configuration(s) using a cell ID received from the C-SN is described.

The method 700A starts at block 702 where the MN receives, from a C-SN, at least one addition list IE in at least one conditional SN procedure with a C-SN, where the at least one addition list IE includes container IE(s) 1, ..., *N*, which include cell ID(s) 1, ..., *N* and CG-Config IE(s) 1, ..., *N*, respectively, where *N* ≥ 1 (e.g., event 308). At block 704, the MN receives, from the C-SN, an SN message including a modification list IE including a container IE (e.g., event 360). At block 706, the MN retrieves a first cell ID and a first CG-Config IE from the container IE. At block 708, the MN determines whether the first cell ID can be found in cell ID(s) 1, ..., *N.* If the first cell ID can be found, the flow proceeds to block 710 where the MN identifies a second CG-Config IE in accordance with the first cell ID. The flow may then proceed to block 712 where the MN replaces the second CG-Config IE with the first CG-Config IE (e.g., event 362) or to block 714 where the MN augments the second CG-Config IE with the first CG-Config IE (e.g., event 362). If the first cell ID can be found at block 708, the flow instead proceeds to block 716 where the MN stores the first cell ID and the first CG-Config IE (e.g., event 362).

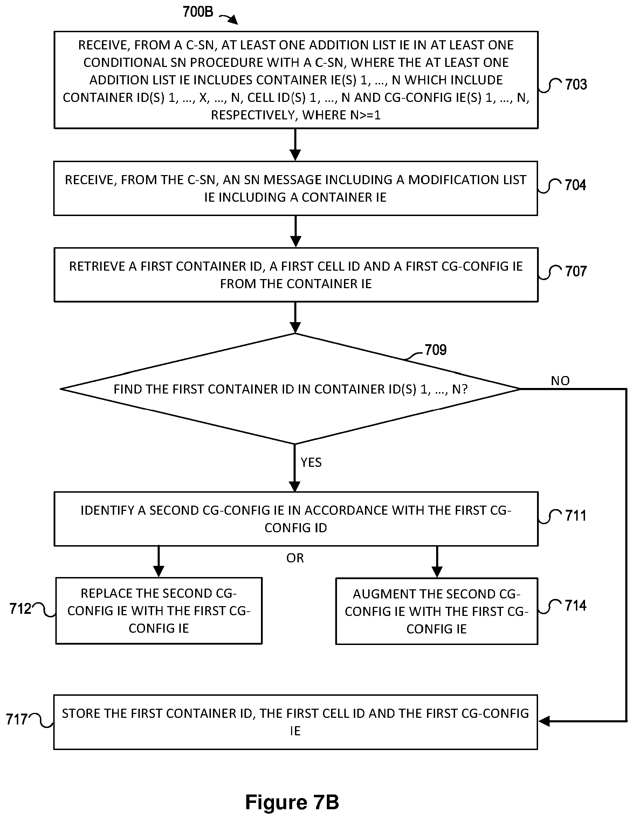

Referring next to Fig. 7B, a method 700B where an MN (e.g., the MN 104A) performs an SN procedure with a C-SN (e.g., the C-SN 106A) and later modifies (e.g., replaces or adds to) the prepared conditional configuration(s) using a container ID received from the C-SN is described.

The method 700B starts at block 703 where the MN receives, from a C-SN, at least one addition list IE in at least one conditional SN procedure with a C-SN, where the at least one addition list IE includes container IE(s) 1, ..., *N*, which include container ID(s) 1, ..., *X, ..., N,* cell ID(s) 1, ..., *N* and CG-Config IE(s) 1, ..., *N*, respectively, where *N* ≥ 1 (e.g., event 308). At block 704, the MN receives, from the C-SN, an SN message including a modification list IE including a container IE (e.g., event 360). At block 707, the MN retrieves a first container ID, a first cell ID, and a first CG-Config IE from the container IE. At block 709, the MN determines whether the first container ID can be found in container ID(s) 1, ..., *N.* If the first container ID can be found, the flow proceeds to block 711 where the MN identifies a second CG-Config IE in accordance with the first container ID. The flow may then proceed to block 712 where the MN replaces the second CG-Config IE with the first CG-Config IE (e.g., event 362) or to block 714 where the MN augments the second CG-Config IE with the first CG-Config IE (e.g., event 362). In some implementations, the MN can determine whether to proceed to block 712 or to block 714 depending on whether an indication is included in the container. For example, the container may include a field or flag indicating that the received container should replace, or augment, an existing container. If the first container ID can be found at block 709, the flow instead proceeds to block 717 where the MN stores the first container ID, the first cell ID and the first CG-Config IE (e.g., event 362).

In some implementations, the container ID(s) 1, ..., X, ..., *N* can be CG-CandidateInfo ID(s) 1, *..., X, ..., N* or CG-Config ID(s) 1, ..., *X,* ..., *N.*

Turning to Fig. 8, a method 800 where an MN (e.g., the MN 104A) performs an SN procedure with an SN (e.g., the C-SN 106A) and later modifies (e.g., replaces or adds) to the prepared conditional configuration(s) using a replacement list is described.

The method 800 starts at block 802 where the MN receives, from a C-SN, a first list IE in a conditional SN procedure with the MN, where the first list IE includes at least one first container IE, each including a particular cell ID and a particular CG-Config IE (e.g., event 308). At block 804, the MN receives, from the C-SN, an SN message including a second list IE, where the second list IE includes at least one second container IE, each including a particular cell ID and a particular CG-Config IE (e.g., event 360). The second list IE may include fewer, additional, or modified container IE(s) from the first list IE. The MN at block 806 replaces the first list with the second list IE (e.g., event 362).

Turning to Fig. 9, a network node operating as a C-SN (e.g., the C-SN 106A or the CU 172 of the C-SN 106A) can implement a method 900 to manage a conditional procedure (e.g., CPAC or CSAC) that involves a UE (e.g., the UE 102), the C-SN, and a network node operating as an MN (e.g., the MN 104A). At block 902, the C-SN generates a list of one or more candidate cells of the C-SN (e.g., a CG-CandidateList), the list including, for each candidate cell of the one or more candidate cells, a respective conditional configuration having a condition to be satisfied for the UE to connect to the candidate cell (e.g., event 306). At block 904, the C-SN transmits the list to the MN (e.g., event 308). At block 906, the C-SN transmits, to the MN, an indication of an update to the list (e.g., event 360).

In some implementations, the C-SN determines to update the list in response to receiving a request from the MN to update the list (e.g., event 356). The request may include a measurement related to the one or more candidate cells and/or a maximum number of cells that the C-SN is permitted to configure as candidate cells. In other implementations, the C-SN may determine without receiving an explicit request from the MN to update the list (e.g., event 358 in Fig. 3F). For example, the C-SN can determine to update the list based on a measurement received by the C-SN from the UE, a resource or connection status change at the C-SN (e.g., a change in available resources), or a measurement performed by the C-SN on a signal received from the UE.

The update may be an addition of a cell to the list or a modification or removal of a cell within the list. In some implementations, the C-SN may determine to remove a cell from the list, in which case the indication of the update indicates to remove the cell. In such implementations, the indication of the update may include a cell identifier of the cell (e.g., block 408 of Fig. 4A), an index corresponding to a position of the cell in the list (e.g., block 409 of Fig. 4B), a new, second list excluding the cell (e.g., block 407 of Fig. 4C, block 804 of Fig. 8), or a container identifier corresponding to the cell (e.g., block 418 of Fig. 4D). In other implementations, the C-SN may determine to add a cell to the list, in which case the indication of the update indicates to add the cell. In such implementations, the indication of the update may include a container including a cell identifier of the cell and a conditional configuration of the cell (e.g., block 704 of Fig. 7A), a container including a cell identifier of the cell, a conditional configuration of the cell, and a container identifier of the cell (e.g., block 704 of Fig. 7B), or a second list including the one or more candidate cells and the cell (e.g., block 804 of Fig. 8). In still other implementations, the C-SN may determine to modify a conditional configuration for a cell of the one or more candidate cells, in which case the indication of the update indicates to modify the cell. In such implementations, the indication of the update may include a container including a cell identifier of the cell and an updated conditional configuration of the cell (and, in some cases, a container identifier) (e.g., block 508 of Fig. 5A, block 509 of Fig. 5C), or a new, second list having such a container, where the container replaces an existing container included in the first list and corresponding to the cell (e.g., block 511 of Fig. 5B or block 804 or Fig. 8).

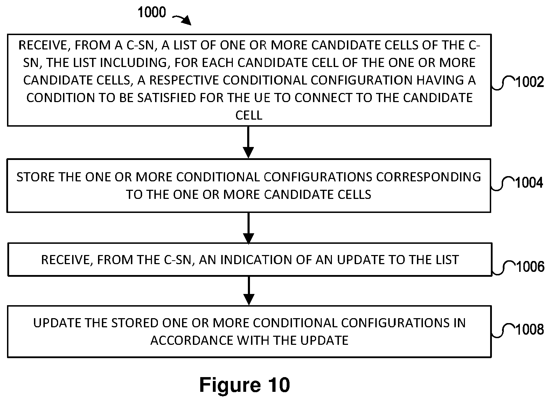

Referring next to Fig. 10, a network node operating as an MN (e.g., the MN 104A) can implement a method 1000 to manage a conditional procedure (e.g., CPAC or CSAC) that involves a UE (e.g., the UE 102), the MN, and a network node operating as a C-SN (e.g., the C-SN 106A). At block 1002, the MN receives, from the C-SN, a list of one or more candidate cells of the C-SN, the list including, for each candidate cell of the one or more candidate cells, a respective conditional configuration having a condition to be satisfied for the UE to connect to the candidate cell (e.g., event 308). At block 1004, the MN stores the one or more conditional configurations corresponding to the one or more candidate cells. At block 1006, the MN receives, from the C-SN, an indication of an update to the list (e.g., event 360). At block 1008, the MN updates the stored one or more conditional configurations in accordance with the update (e.g., event 362).

In some implementations, the MN determines, after receiving the list and prior to receiving the indication of the update, to update the list, and transmits a request to the C-SN to update the list (e.g., event 356 of Fig. 3D). The MN may determine to update the list based on a measurement and/or after determining to change a maximum number of cells that the C-SN is permitted to configure as candidate cells. In such cases, the MN may include the measurement and/or the maximum number of cells in the request. In other implementations, the MN determines to update the list based on receiving, from an S-SN providing DC to the UE with the MN, an instruction to update the list (e.g., event 370). In still other implementations, the C-SN determines to update the list without receiving an explicit request from the MN (e.g., Fig. 3F).

In some implementations, updating the stored conditional configurations includes releasing a stored conditional configuration for a cell (e.g., by releasing a CG-Config IE including the conditional configuration). In such implementations, the indication of the update may include a cell identifier of the cell (e.g., block 604 of Fig. 6A), an index corresponding to a position of the cell in the list (e.g., block 605 of Fig. 6B), or a container identifier corresponding to the cell (e.g., block 603 of Fig. 6C). The MN can release the stored conditional configuration of the cell indicated by the received cell identifier, index, or container identifier. In other implementations, updating the stored conditional configurations includes storing a new conditional configuration or modifying an existing conditional configuration (e.g., by storing a new CG-Config IE or replacing or augmenting a CG-Config IE). In such implementations, the MN may receive a container including a cell identifier and a conditional configuration (and, in some cases, a container identifier) from the C-SN (e.g., block 704 of Figs. 7A-7B). If the cell identifier or the container identifier is included in the list, then the MN can modify (e.g., replace or augment) the stored conditional configuration of the cell indicated by the cell identifier or container identifier with the received conditional configuration (e.g., blocks 712 or 714 of Fig. 7A-7B). If neither the cell identifier nor the container identifier is included in the list, then the MN can identify that the cell is a new cell not included in the one or more candidate cells, and store, as a new candidate cell, the first conditional configuration with the first cell identifier (e.g., block 716 of Fig. 7A, block 717 of Fig. 7B).

Further, in some implementations, receiving the indication of the update includes receiving a new, second list (e.g., block 804 of Fig. 8). The MN can replace the first list with the second list, and store the conditional configurations included in the second list.

The following description may be applied to the description above.

In some implementations, "message" is used and can be replaced by "information element (IE)". In some implementations, "IE" is used and can be replaced by "field". In some implementations, "configuration" can be replaced by "configurations" or the configuration parameters. In some implementations, the "CG-CandidateInfo ID" can be replaced by a "CG-Config ID" or another IE name.

A user device in which the techniques of this disclosure can be implemented (e.g., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (e.g., code, or machine-readable instructions stored on non-transitory machine-readable medium) or hardware modules. A hardware module is a tangible unit capable of performing certain operations and may be configured or arranged in a certain manner. A hardware module can comprise dedicated circuitry or logic that is permanently configured (e.g., as a special-purpose processor, such as a field programmable gate array (FPGA) or an application-specific integrated circuit (ASIC), a digital signal processor (DSP), etc.) to perform certain operations. A hardware module may also comprise programmable logic or circuitry (e.g., as encompassed within a general-purpose processor or other programmable processor) that is temporarily configured by software to perform certain operations. The decision to implement a hardware module in dedicated and permanently configured circuitry, or in temporarily configured circuitry (e.g., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

## Claims

1. A method implemented in a network node in a radio access network, RAN, the network node operating as a candidate secondary node, C-SN, for managing a conditional procedure that involves a user equipment, UE, the C-SN, and another network node operating as a master node, MN, the method comprising:
transmitting (904), by the C-SN to the MN, a message including a list of candidate cells of the C-SN for addition or modification, the list including:
at least one candidate cell for addition,
at least one candidate cell for modification, and
for each candidate cell of the candidate cells, a respective conditional configuration associated with a condition to be satisfied for the UE to connect to the candidate cell.

2. The method of claim 1, wherein the message is *CG-CandidateList.*

3. The method of claim 1 or 2, wherein the message includes cg-*CandidateToAddModList* or *cg-Candidate ToAddModList-r1* 7, or wherein the message includes *cg-CandidateToReleaseList* or *cg-CandidateToReleaseList-r17.*

4. The method of any of the preceding claims, wherein:
the list is an updated list;
the method further comprising:
transmitting, by a core network, CN, to the MN and prior to transmitting the message, an initial list of candidate cells.

5. The method of claim 4, wherein the initial list of candidate cells is included in an *SNAddition Request Ack* message.

6. The method of claim 4 or 5, further comprising:
receiving a request from the MN to update the initial list, the request including at least one of (i) a measurement related to the one or more candidate cells or (ii) an indication of a maximum number of cells that the C-SN is permitted to configure as candidate cells;
generating the updated list in response to the request.

7. The method of claim 6, wherein the message is one of:
*(i) SNAddition Request Ack,*
*(ii) NG-RAN node Configuration Update,* or
*(iii) E-UTRA - NR Cell Resource Coordination Request.*

8. The method of claim 1, wherein:
the list includes, for each candidate cell of the one or more candidate cells, a cell identifier of the candidate cell, and the conditional configuration for the candidate cell.

9. A method implemented in a network node, operating as a master node, MN, for managing a conditional procedure that involves a user equipment, UE, the MN, and a network node operating as a C-SN, the method comprising:
receiving (904), by the MN from the C-SN, an information element for conveying a list of candidate cells of the C-SN for addition or modification, the list including: at least one candidate cell for addition
at least one candidate cell for modification, and
for each candidate cell of the candidate cells, a respective conditional configuration associated with a condition to be satisfied for the UE to connect to the candidate cell.

10. The method of claim 9, further comprising:
receiving, by the MN from the C-SN, an indication of an update to the list; and
updating, by the MN, the stored one or more conditional configurations in accordance with the update.

11. The method of claim 10, further comprising:
determining, by the processing hardware after receiving the list and prior to receiving the indication of the update, to update the list; and
transmitting, by the processing hardware to the C-SN, a request to update the list.

12. The method of claim 10 or 11, wherein the information is one of:
(i) is *cg-CandidateToAdoModList,*
*(ii) cg-CandidateToAdoModList-r 1* 7
*(iii) cg-CandidateToReleaseList, or*
*(iv) cg-CandidateToReleaseList-r17.*

13. The method of any of claims 9-12, further comprising: storing, by the MN, the one or more conditional configurations corresponding to the one or more candidate cells

14. A network node comprising:
a transceiver; and
processing hardware configured to implement a method according to any one of the preceding claims.

## Patentansprüche

1. Verfahren, implementiert in einem Netzwerkknoten in einem Funkzugangsnetzwerk (RAN - radio access network), wobei der Netzwerkknoten als Kandidaten-Sekundärknoten (C-SN - candidate secondary node) zum Verwalten einer bedingten Prozedur betrieben wird, die eine Benutzerausrüstung (UE - user equipment), den C-SN und einen anderen Netzwerkknoten, der als Masterknoten (MN - master node) betrieben wird, umfasst, wobei das Verfahren umfassend:
Übertragen (904), durch den C-SN an den MN, einer Nachricht, die eine Liste von Kandidatenzellen des C-SN zur Hinzufügung oder Modifikation beinhaltet, wobei die Liste beinhaltet:
mindestens eine Kandidatenzelle zur Hinzufügung,
mindestens eine Kandidatenzelle zur Modifikation, und
für jede Kandidatenzelle der Kandidatenzellen eine jeweilige bedingte Konfiguration, die mit einer Bedingung verbunden ist, die erfüllt werden muss, damit die UE eine Verbindung zur Kandidatenzelle herstellt.

2. Verfahren nach Anspruch 1, wobei die Nachricht CG-*CandidateList* ist.

3. Verfahren nach Anspruch 1 oder 2, wobei die Nachricht *cg-CandidateToAddModList* oder *cg-Candidate ToAddModList-rl* 7 beinhaltet, oder wobei die Nachricht *cg-CandidateToReleaseList* oder *cg-CandidateToReleaseList-r17* beinhaltet.

4. Verfahren nach einem der vorhergehenden Ansprüche, wobei:
die Liste eine aktualisierte Liste ist;
das Verfahren ferner umfassend:
Übertragen, durch ein Kernnetzwerk (CN - core network) an den MN und vor dem Übertragen der Nachricht, einer anfänglichen Liste von Kandidatenzellen.

5. Verfahren nach Anspruch 4, wobei die anfängliche Liste von Kandidatenzellen in einer *SNAddition Request Ack*-Nachricht enthalten ist.

6. Verfahren nach Anspruch 4 oder 5, ferner umfassend:
Empfangen einer Anforderung vom MN zur Aktualisierung der anfänglichen Liste, wobei die Anforderung mindestens eines von (i) einer Messung in Bezug auf die eine oder mehreren Kandidatenzellen oder (ii) einer Angabe einer maximalen Anzahl von Zellen, die der C-SN als Kandidatenzellen konfiguriert werden darf, beinhaltet;
Erzeugen der aktualisierten Liste als Reaktion auf die Anforderung.

7. Verfahren nach Anspruch 6, wobei die Nachricht eines von ist:
*(i) SNAddition Request Ack,*
*(ii) NG-RAN node Configuration Update,* oder
*(iii) E-UTRA - NR Cell Resource Coordination Request.*

8. Verfahren nach Anspruch 1, wobei:
die Liste für jede Kandidatenzelle der einen oder mehreren Kandidatenzellen eine Zellenkennung der Kandidatenzelle und die bedingte Konfiguration für die Kandidatenzelle beinhaltet.

9. Verfahren, implementiert in einem Netzwerkknoten, der als Masterknoten (MN) betrieben wird, zum Verwalten einer bedingten Prozedur, die eine Benutzerausrüstung (UE), den MN und einen Netzwerkknoten, der als C-SN betrieben wird, umfasst, wobei das Verfahren umfassend:
Empfangen (904), durch den MN vom C-SN, eines Informationselements zum Übermitteln einer Liste von Kandidatenzellen des C-SN zur Hinzufügung oder Modifikation, wobei die Liste beinhaltet: mindestens eine Kandidatenzelle zur Hinzufügung
mindestens eine Kandidatenzelle zur Modifikation, und
für jede Kandidatenzelle der Kandidatenzellen eine jeweilige bedingte Konfiguration, die mit einer Bedingung verbunden ist,
die erfüllt werden muss, damit die UE eine Verbindung zur Kandidatenzelle herstellt.

10. Verfahren nach Anspruch 9, ferner umfassend:
Empfangen, durch den MN vom C-SN, einer Angabe einer Aktualisierung der Liste; und
Aktualisieren, durch den MN, der gespeicherten einen oder mehreren bedingten Konfigurationen gemäß der Aktualisierung.

11. Verfahren nach Anspruch 10, ferner umfassend:
Bestimmen, durch die Verarbeitungshardware nach dem Empfangen der Liste und vor dem Empfangen der Angabe der Aktualisierung, die Liste zu aktualisieren; und
Übertragen, durch die Verarbeitungshardware an den C-SN, einer Anforderung zur Aktualisierung der Liste.

12. Verfahren nach Anspruch 10 oder 11, wobei die Informationen eines von sind:
(i) ist *cg-CandidateToAdoModList,*
*(ii) cg-CandidateToAdoModList-r 1 7*
*(iii) cg-CandidateToReleaseList, oder*
*(iv) cg-CandidateToReleaseList-r17.*

13. Verfahren nach einem der Ansprüche 9-12, ferner umfassend:
Speichern, durch den MN, der einen oder mehreren bedingten Konfigurationen, die den einen oder mehreren Kandidatenzellen entsprechen.

14. Netzwerkknoten, umfassend:
einen Transceiver; und
Verarbeitungshardware, die konfiguriert ist, ein Verfahren nach einem der vorhergehenden Ansprüche zu implementieren.

## Revendications

1. Procédé mis en œuvre dans un nœud de réseau d'un réseau d'accès radio, RAN, le nœud de réseau fonctionnant en tant que nœud secondaire candidat, C-SN, pour la gestion d'une procédure conditionnelle qui implique un équipement utilisateur, UE, le C-SN et un autre nœud de réseau fonctionnant en tant que nœud maître, MN, le procédé comprenant :
la transmission (904), par le C-SN au MN, d'un message comportant une liste de cellules candidates du C-SN pour ajout ou modification, la liste comportant :
au moins une cellule candidate pour ajout,
au moins une cellule candidate pour modification, et
pour chaque cellule candidate des cellules candidates, une configuration conditionnelle respective associée à une condition à satisfaire pour que l'UE se connecte à la cellule candidate.

2. Procédé selon la revendication 1, dans lequel le message est *CG-CandidateList.*

3. Procédé selon la revendication 1 ou 2, dans lequel le message comporte *cg-CandidateToAddModList* ou *cg-Candidate ToAddModList-r1* 7, ou dans lequel le message comporte *cg-CandidateToReleaseList* ou *cg-CandidateToReleaseList-r17.*

4. Procédé selon l'une quelconque des revendications précédentes, dans lequel :
la liste est une liste mise à jour ;
le procédé comprenant en outre :
la transmission, par un réseau central, CN, au MN et avant la transmission du message, d'une liste initiale de cellules candidates.

5. Procédé selon la revendication 4, dans lequel la liste initiale de cellules candidates est incluse dans un message *d'accusé de réception de demande SNAddition.*

6. Procédé selon la revendication 4 ou 5, comprenant en outre :
la réception d'une demande en provenance du MN pour mettre à jour la liste initiale, la demande comportant au moins l'un des éléments suivants : (i) une mesure relative aux une ou plusieurs cellules candidates ou (ii) une indication d'un nombre maximal de cellules que le C-SN est autorisé à configurer en tant que cellules candidates ;
la génération de la liste mise à jour en réponse à la demande.

7. Procédé selon la revendication 6, dans lequel le message est l'un des suivants :
*(i) accusé de réception de demande SNAddition,*
*(ii) mise à jour de configuration de nœud NG-RAN,* ou
*(iii) demande de coordination de ressource de cellule E-UTRA - NR.*

8. Procédé selon la revendication 1, dans lequel :
la liste comporte, pour chaque cellule candidate des une ou plusieurs cellules candidates, un identifiant de cellule de la cellule candidate et la configuration conditionnelle pour la cellule candidate.

9. Procédé mis en œuvre dans un nœud de réseau, fonctionnant en tant que nœud maître, MN, pour la gestion d'une procédure conditionnelle qui implique un équipement utilisateur, UE, le MN et un nœud de réseau fonctionnant en tant que C-SN, le procédé comprenant :
la réception (904), par le MN en provenance du C-SN, d'un élément d'informations destiné à transporter une liste de cellules candidates du C-SN pour ajout ou modification, la liste comportant : au moins une cellule candidate pour ajout au moins une cellule candidate pour modification, et
pour chaque cellule candidate des cellules candidates, une configuration conditionnelle respective associée à une condition à satisfaire pour que l'UE se connecte à la cellule candidate.

10. Procédé selon la revendication 9, comprenant en outre :
la réception, par le MN en provenance du C-SN, d'une indication d'une mise à jour de la liste ; et
la mise à jour, par le MN, des une ou plusieurs configurations conditionnelles stockées conformément à la mise à jour.

11. Procédé selon la revendication 10, comprenant en outre :
la détermination, par le matériel de traitement après réception de la liste et avant réception de l'indication de la mise à jour, de mettre à jour la liste ; et
la transmission, par le matériel de traitement au C-SN, d'une demande de mise à jour de la liste.

12. Procédé selon la revendication 10 ou 11, dans lequel les informations sont l'une des suivantes :
*(i) cg-CandidateToAdoModList,*
*(ii) cg-CandidateToAdoModList-r 1 7*
*(iii) cg-CandidateToReleaseList, ou*
*(iv) cg-CandidateToReleaseList-r17.*

13. Procédé selon l'une quelconque des revendications 9 à 12, comprenant en outre : le stockage, par le MN, des une ou plusieurs configurations conditionnelles correspondant aux une ou plusieurs cellules candidates

14. Nœud de réseau comprenant :
un émetteur-récepteur ; et
un matériel de traitement configuré pour mettre en œuvre un procédé selon l'une quelconque des revendications précédentes.
